# EUROPEAN PATENT APPLICATION

(11) **EP 4 841 922 A1**
(43) Date of publication of application: **18.11.2026**
(21) Application number: 24916095.3
(22) Date of filing: 12.01.2024
(51) Int. Cl.: H04L 5/00, H04W 72/04

(54) **CONFIGURATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LU, Qianxi, Dongguan, Guangdong 523860 (CN); LENG, Bingxue, Dongguan, Guangdong 523860 (CN)
(74) Representative: RGTH
(86) International application number: PCT/CN2024/072096
(87) International publication number: WO 2025/148031

(57) **Abstract**

The present application relates to a configuration method, a terminal device, and a network device. The configuration method comprises: a terminal device receives multiple DRX configurations. In the present application, multiple DRX configurations can be implemented for the terminal device.

## Description

### TECHNICAL FIELD

The present application relates to the field of communications, and in particular, to a configuration method, a terminal device and a network device.

### BACKGROUND

In a 5th generation mobile communication technology (5G) new radio (NR) system, a network may configure a discontinuous reception (DRX) function for a terminal device, enabling the terminal device to monitor a physical downlink control channel (PDCCH) discontinuously, so as to achieve the purpose of power saving for the terminal device. For a media access control (MAC) entity, a network device configures only one set of DRX configurations for the terminal device. How to perform multiple DRX configurations for the terminal device is a technical problem that needs to be solved.

### SUMMARY

Embodiments of the present application provide a configuration method, a terminal device, and a network device, which can implement multiple DRX configurations for a terminal device.

The embodiments of the present application provide a configuration method, which includes: receiving, by a terminal device, multiple DRX configurations.

The embodiments of the present application provide a control method, which includes: performing, by a terminal device, a first operation, where the first operation is related to PDCCH monitoring.

The embodiments of the present application provide a configuration method, which includes: transmitting, by a network device, multiple DRX configurations.

The embodiments of the present application provide a terminal device, which includes: a first transceiver module, configured to receive multiple DRX configurations.

The embodiments of the present application provide a terminal device, which includes: a second processing module, configured to perform a first operation, where the first operation is related to PDCCH monitoring.

The embodiments of the present application provide a network device, which includes: a third transceiver module, configured to receive multiple DRX configurations.

The embodiments of the present application provide a terminal device, which includes: a transceiver, a processor, and a memory, where the memory is configured to store a computer program, the transceiver is configured to communicate with other devices, and the processor is configured to invoke and execute the computer program stored in the memory, to enable the terminal device to perform the above configuration method.

The embodiments of the present application provide a network device, which includes: a transceiver, a processor, and a memory, where the memory is configured to store a computer program, the transceiver is configured to communicate with other devices, and the processor is configured to invoke and execute the computer program stored in the memory, to enable the network device to perform the above configuration method.

The embodiments of the present application provide a chip for implementing the above configuration methods.

Specifically, the chip includes: a processor, configured to invoke a computer program from a memory and execute the computer program, to enable a device equipped with the chip to perform the above configuration methods.

The embodiments of the present application provide a computer-readable storage medium, configured to store a computer program, where the computer program, when executed by a device, enables the device to perform the above configuration methods.

The embodiments of the present application provide a computer program product, which includes computer program instructions, where the computer program instructions enable a computer to perform the above configuration methods.

The embodiments of the present application provide a computer program, where the computer program, when run on a computer, enables the computer to perform the above configuration methods.

In the configuration method provided in the embodiments of the present application, by the terminal device receiving the multiple DRX configurations, the multiple DRX configurations for the terminal device can be achieved, so as to be respectively used for different targets or scenarios, or for different services, logical channels (LCHs), Quality of Service (QoS) flows, QoS profiles, or the like.

### BRIEF DESCRIPTION OF THE DRAWINGS

FIG. 1 exemplarily illustrates a communication system 100.
FIG. 2 is a schematic flowchart of a configuration method 200 according to an embodiment of the present application.
FIG. 3 is a schematic flowchart of a configuration method 300 according to an embodiment of the present application.
FIG. 4 is a schematic flowchart of a control method 400 according to an embodiment of the present application.
FIG. 5 is a schematic block diagram of a terminal device 500 according to an embodiment of the present application.
FIG. 6 is a schematic block diagram of a terminal device 600 according to an embodiment of the present application.
FIG. 7 is a schematic block diagram of a terminal device 700 according to an embodiment of the present application.
FIG. 8 is a schematic block diagram of a terminal device 800 according to an embodiment of the present application.
FIG. 9 is a schematic block diagram of a network device 900 according to an embodiment of the present application.
FIG. 10 is a schematic structural diagram of a communication device 1000 according to the embodiments of the present application.
FIG. 11 is a schematic structural diagram of a chip 1100 according to the embodiments of the present application.

### DETAILED DESCRIPTION OF EMBODIMENTS

Technical solutions in the embodiments of the present application will be described below in conjunction with accompanying drawings in the embodiments of the present application.

The technical solutions in the embodiments of the present application may be applied to various communication systems, such as: a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), wireless fidelity (WiFi), a 5th-Generation (5G) communication system, or other communication systems.

Generally speaking, conventional communication systems support a limited number of connections and are relatively easy to implement. However, with the development of communication technologies, mobile communication systems support not only the conventional communications but also communications such as device to device (D2D) communication, machine to machine (M2M) communication, machine type communication (MTC), vehicle to vehicle (V2V) communication, or vehicle to everything (V2X) communication. The embodiments of the present application may also be applied to such communication systems.

In an implementation, the communication system in the embodiments of the present application may be applied to a carrier aggregation (CA) scenario, a dual connectivity (DC) scenario, or a standalone (SA) networking scenario.

In an implementation, the communication system in the embodiments of the present application may be applied to an unlicensed spectrum. The unlicensed spectrum may also be considered as a shared spectrum. Alternatively, the communication system in the embodiments of the present application may be applied to a licensed spectrum. The licensed spectrum may also be considered as an unshared spectrum.

In the embodiments of the present application, various embodiments are described in conjunction with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (ST) in the WLAN, a cellular phone, a cordless phone, a session initiation protocol (SIP) phone, a wireless local loop (WLL) station, a personal digital assistant (PDA) device, a handheld device with wireless communication functions, a computing device or other processing devices connected to a wireless modem, a vehicle-mounted device, a wearable device, a terminal device in a next-generation communication system (such as an NR network), a terminal device in a future evolved public land mobile network (PLMN), or the like.

In the embodiments of the present application, the terminal device may be deployed on land, including indoor or outdoor, handheld, wearable or vehicle-mounted, or may also be deployed on water (e.g., on a ship), or may also be deployed in air (e.g., on an airplane, a balloon, and a satellite).

In the embodiments of the present application, the terminal device may be a mobile phone, a pad, a computer with wireless transceiving functions, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present application, the terminal device may also be a wearable device. The wearable device, which may also be referred to as a wearable smart device, is a generic term for devices capable of being worn, into which the daily wear is intelligently designed and developed by applying wearable technologies, such as glasses, gloves, watches, clothing, or shoes. The wearable device is a portable device that is worn directly on the body, or integrated into a user's clothing or accessories. The wearable device is not only a hardware device, but also a device that achieves powerful functions through software support, data interaction or cloud interaction. Generalized wearable smart devices include full-featured and large-sized devices that may implement full or partial functionality without relying on smart phones, such as a smart watch or smart glasses, and devices that focus on a specific type of application functionality only and need to be used in conjunction with other devices (such as smart phones), such as various smart bracelets or smart jewelry for monitoring physical signs.

In the embodiments of the present application, the network device may be a device used for communicating with a mobile device. The network device may be an access point (AP) in WLAN, an evolved base station (Evolutional NodeB, eNB or eNodeB) in LTE, a relay station or an access point, a vehicle-mounted device, a wearable device, a network device (gNB) in an NR network, or a network device in a future evolved PLMN network, or a network device in an NTN network, or the like.

As an example but not a limitation, in the embodiments of the present application, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station provided on land, water, or other places.

In the embodiments of the present application, the network device may provide services for a cell, and the terminal device communicates with the network device through transmission resources (e.g., frequency domain resources, or in other words, frequency spectrum resources) used by the cell. The cell may be a cell corresponding to the network device (e.g., a base station). The cell may belong to a macro base station or belong to a base station corresponding to a small cell. The small cell here may include a metro cell, a micro cell, a pico cell, a femto cell or the like. These small cells have characteristics of small coverage range and low transmit power, which are applicable to providing a data transmission service with a high rate.

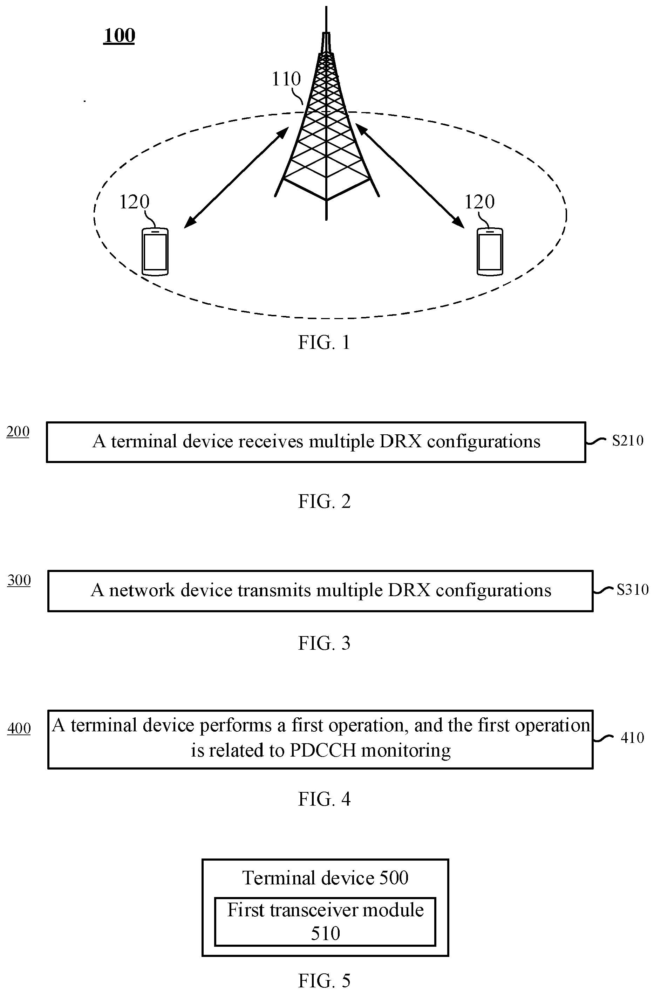

FIG. 1 exemplarily illustrates a communication system 100. The communication system includes a network device 110 and two terminal devices 120. In an implementation, the communication system 100 may include multiple network devices 110, and the coverage range of each network device 110 may include other numbers of terminal devices 120, which is not limited in the embodiments of the present application.

In an implementation, the communication system 100 may further include other network entities, such as a mobility management entity (MME) and an access and mobility management function (AMF), which are not limited in the embodiments of the present application.

The network device may further include an access network device and a core network device. That is, the wireless communication system further includes multiple core networks used for communicating with the access network device. The access network device may be an evolutional node B (which may be abbreviated as eNB or e-NodeB), a macro base station, a micro base station (also referred to as a "small base station"), a pico base station, an access point (AP), a transmission point (TP), a new generation Node B (gNodeB) or the like in a long-term evolution (LTE) system, a next-generation (mobile communication system) (next radio, NR) system or an authorized auxiliary access long-term evolution (LAA-LTE) system.

It should be understood that in the embodiments of the present application, a device having a communication function in a network/system may be referred to as a communication device. In an example of the communication system illustrated in FIG. 1, the communication device may include a network device and a terminal device, which have the communication function. The network device and the terminal device may be specific devices in the embodiments of the present application, and will not be detailed further here. The communication devices may further include other devices in the communication system, such as a network controller, a mobile management entity or other network entities, which are not limited in the embodiments of the present application.

It should be understood that the terms "system" and "network" are often used interchangeably herein. The term "and/or" herein is only an association relationship to describe associated objects, which means that there may be three kinds of relationships. For example, A and/or B may represent three cases that: A exists alone, both A and B exist, and B exists alone. In addition, the character "/" herein generally means that associated objects before and after "/" are in an "or" relationship.

It should be understood that "indicate" mentioned in the embodiments of the present application may mean a direct indication, or may mean an indirect indication, or may mean that there is an association relationship. By way of example, A indicating B may mean that A directly indicates B (for example, B may be obtained by A), or may mean that A indirectly indicates B (for example, A indicates C, and B may be obtained by C), or may mean that there is an association relationship between A and B.

In the description of the embodiments of the present application, the term "correspond" may mean that there is a direct correspondence or indirect correspondence between the two, or may mean that there is an associated relationship between the two, or may mean a relationship of indicating and being indicated, a relationship of configuring and being configured, or the like.

To facilitate understanding of the technical solutions in the embodiments of the present application, the related technologies of the embodiments of the present application will be described below. The following related technologies, as optional solutions, may be arbitrarily combined with the technical solutions of the embodiments of the present application, which all fall within the protection scope of the embodiments of the present application.

### I. Background Related to XR/URLLC

In the research of 3GPP technology, studies related to eXtended Reality (XR) and Cloud gaming (CG) are involved. The services involved in the studies include augmented reality (AR), virtual reality (VR), cloud gaming, or the like. One primary service of XR/CG is the video stream service.

Application layer data exchanged between a UE and an application server or a peer UE, such as AR/VR/cloud gaming/live video, generally includes multiple types of data streams such as voice, video, text, and control information. These data streams generally require synchronization among the data streams. For example, data such as voice, video and subtitles need to be presented to the user synchronously. The current practice for video playback is to synchronize multiple data streams at the application layer, for example, by buffering the received multiple data streams and extracting corresponding data frames of the multiple data streams according to timestamps of the playback data streams to synchronously display them to the user.

In the related art, the requirements for multi-modality such as synchronization/coordination cannot be fully met. Therefore, it is necessary to consider support and enhancement for multi-modality in RAN.

### II. 5G NR DRX Procedure

In 5G NR technology, a network may configure a DRX function for a terminal, enabling the terminal to monitor a PDCCH discontinuously, so as to achieve the purpose of power saving for the terminal. Each MAC entity is configured with a DRX configuration, and the DRX configuration parameters include at least one of:
a DRX on-duration timer (drx-onDurationTimer);
a DRX slot offset (drx-SlotOffset);
a DRX inactivity timer (drx-InactivityTimer);
a DRX downlink retransmission timer (drx-RetransmissionTimerDL);
a DRX uplink retransmission timer (drx-RetransmissionTimerUL);
a DRX long cycle start offset (drx-LongCycleStartOffset);
a DRX short cycle (drx-ShortCycle);
a DRX short cycle timer (drx-ShortCycleTimer);
a DRX downlink Hybrid Automatic Repeat-Request (HARQ) round-trip time timer (drx-HARQ-RTT-TimerDL); or
a DRX uplink HARQ round-trip time timer (drx-HARQ-RTT-TimerUL).

If the terminal is configured with DRX, the terminal needs to monitor the PDCCH during the DRX active time. The DRX active time includes the following cases:
any one of the following five timers is running: drx-onDurationTimer, drx-InactivityTimer, drx-RetransmissionTimerDL, drx-RetransmissionTimerUL, or ra-ContentionResolutionTimer;
a reference signal (RS) has been transmitted on the PUCCH and is in a pending state;
during a contention-based random access procedure, the terminal has not yet received an initial transmission indicated by a PDCCH scrambled with a cell radio network temporary identifier (C-RNTI) after successfully receiving a random access response;
the terminal determines when to start drx-onDurationTimer based on whether it is currently in a short DRX cycle or a long DRX cycle, as specified below:
   if the Short DRX Cycle is used and the current subframe satisfies [(SFN × 10) + subframe number] modulo (drx-ShortCycle) = (drx-StartOffset) modulo (drx-ShortCycle); or if the Long DRX Cycle is used and the current subframe satisfies [(SFN × 10) + subframe number] modulo (drx-LongCycle) = drx-StartOffset, then the drx-onDurationTimer is started at the moment after drx-SlotOffset slots from the start of the current subframe.

The condition for the terminal to start or restart the drx-InactivityTimer is that: if the terminal receives a PDCCH indicating a downlink or uplink initial transmission, the terminal starts or restarts the drx-InactivityTimer.

The conditions for the terminal to start and stop the drx-RetransmissionTimerDL are that:
when the terminal receives a PDCCH indicating a downlink transmission, or when the terminal receives a MAC packet data unit (PDU) on configured downlink grant resources, the terminal stops the drx-RetransmissionTimerDL corresponding to the HARQ process. The terminal starts the drx-HARQ-RTT-TimerDL corresponding to the HARQ process after completing the transmission of the HARQ process feedback for the downlink transmission.

If the timer drx-HARQ-RTT-TimerDL corresponding to a certain HARQ of the terminal expires, and the downlink data transmitted using the HARQ process is not successfully decoded, the terminal starts the drx-RetransmissionTimerDL corresponding to the HARQ process.

The conditions for the terminal to start and stop the drx-RetransmissionTimerUL are that:
when the terminal receives a PDCCH indicating an uplink transmission, or when the terminal transmits a MAC PDU on configured uplink grant resources, the terminal stops the drx-RetransmissionTimerUL corresponding to the HARQ process. The terminal starts the drx-HARQ-RTT-TimerUL corresponding to the HARQ process after completing the first repetition of the PUSCH transmission.

If the timer drx-HARQ-RTT-TimerUL corresponding to a certain HARQ of the terminal expires, the terminal starts the drx-RetransmissionTimerUL corresponding to the HARQ process.

As can be seen from the above DRX procedure, after completing the uplink transmission or completing the HARQ process feedback for the downlink transmission, the terminal first starts a DRX HARQ RTT timer (drx-HARQ-RTT-TimerUL for the uplink transmission and drx-HARQ-RTT-TimerDL for the downlink transmission). During the running of the DRX HARQ RTT timer, the terminal is in a sleep state and does not monitor the PDCCH. Only after the timer expires does the terminal start to monitor for uplink retransmission scheduling, or determine whether to start monitoring for downlink retransmission scheduling based on the feedback. The drx-HARQ-RTT-TimerUL and drx-HARQ-RTT-TimerDL are semi-statically configured by the network RRC.

For one MAC entity, the network configures only one set of DRX configurations (DRX config). In one set of DRX config, there is only one set of cycles (for the DRX long cycle or DRX short cycle respectively), and the cycle is an integer multiple of milliseconds (ms).

In the related art, multiple sets of DRX configurations for different services are not supported. For scenarios used for different services/targets/scenarios, or for scenarios such as multi-modality, how to configure multiple DRX configurations for the terminal device, and how the terminal device uses the multiple DRX configurations to perform DRX operation, are technical problems that need to be solved. In addition, how to achieve power consumption control for the terminal device is also an issue that needs to be considered.

FIG. 2 is a schematic flowchart of a configuration method 200 according to an embodiment of the present application. Optionally, the method may be applied to the system illustrated in FIG. 1, but is not limited thereto. The method includes at least part of the following content.

In S210: a terminal device receives multiple DRX configurations.

The terminal device may receive the multiple DRX configurations from a network device.

In some implementations, a DRX parameter configuration in the multiple DRX configurations is included in one or more of the following information:
DRX configuration information (DRX-config);
a DRX configuration secondary group (DRX-configSecondaryGroup); or
a MAC-cell group configuration (MAC-CellGroupConfig).

In some implementations, the multiple DRX configurations may be used for different targets or scenarios, or the multiple DRX configurations may be configured respectively for different services, LCHs, QoS flows or QoS profiles.

In some implementations, the different services are associated services, services for multi-modality, synchronous services, services for coordinated transmission, or services with synchronization or coordination requirements;
the different LCHs are associated LCHs, LCHs for multi-modality, synchronous LCHs, LCHs for coordinated transmission, or LCHs with synchronization or coordination requirements;
the DRX is associated DRB, DRX for multi-modality, synchronous DRX, DRB for coordinated transmission, or DRB with synchronization or coordination requirements;
the different QoS flows are associated QoS flows, QoS flows for multi-modality, synchronous QoS flows, QoS flows for coordinated transmission, or QoS flows with synchronization or coordination requirements;
the different QoS flows are associated PDU sessions, PDU sessions for multi-modality, synchronous PDU sessions, PDU sessions for coordinated transmission, or PDU sessions with synchronization or coordination requirements; and
the different QoS profiles are associated QoS profiles, QoS profiles for multi-modality, synchronous QoS profiles, QoS profiles for coordinated transmission, or QoS profiles with synchronization or coordination requirements.

In some implementations, DRX parameters in the multiple DRX configurations may include at least one of:
a DRX on-duration timer (drx-onDurationTimer);
a DRX slot offset (drx-SlotOffset);
a DRX inactivity timer (drx-InactivityTimer);
a DRX downlink retransmission timer (drx-RetransmissionTimerDL);
a DRX uplink retransmission timer (drx-RetransmissionTimerUL);
a DRX long cycle start offset (drx-LongCycleStartOffset);
a DRX short cycle (drx-ShortCycle);
a DRX short cycle timer (drx-ShortCycleTimer);
a DRX downlink HARQ round-trip time timer (drx-HARQ-RTT-TimerDL);
a DRX uplink HARQ round-trip time timer (drx-HARQ-RTT-TimerUL);
a non-integer DRX long cycle;
a start offset (startOffset) corresponding to the non-integer DRX long cycle; or
a non-integer DRX short cycle.

Each of the DRX parameters may be for the same function; and/or
a plurality of the DRX parameters may be for the same function; and/or
all or part of the plurality of the DRX parameters may be used for different targets or scenarios, or may be configured respectively for different services, LCHs, QoS flows or QoS profiles.

In some implementations, in the multiple DRX configurations, the same DRX configuration may be used for at least one target or scenario, or the same DRX configuration may be configured for at least one service, LCH, QoS flow, or QoS profile. For example, the same DRX configuration may be used for one or more targets, or for one or more scenarios, or for one or more services, or for one or more LCHs, or for one or more QoS flows, or for one or more QoS profiles.

In some implementations, the multiple DRX configurations include multiple configurations for at least one DRX parameter.

In an example, in the at least one DRX parameter, the same DRX parameter may have multiple values.

In an example, different values among the multiple values may be used for different targets or scenarios, or different values among the multiple values may be configured respectively for different services, LCHs, QoS flows or QoS profiles.

For example, the multiple DRX configurations include multiple configurations for the parameter drx-onDurationTimer, such as multiple values for the parameter drx-onDurationTimer; each value is used for different targets or scenarios, or each value is configured separately for different services, LCHs, QoS flows or QoS profiles.

In some implementations, in the multiple DRX configurations, a DRX configuration for the same function includes multiple DRX parameters.

In an example, the different DRX parameters included in the above DRX configuration for the same function may be used for different targets or scenarios, or are configured respectively for different services, LCHs, QoS flows or QoS profiles.

For example, the multiple DRX configurations include parameter drx-onDurationTimer 1 and parameter drx-onDurationTimer 2, and the two DRX parameters are for the same function; and the two DRX parameters are used for different targets or scenarios, or are configured respectively for different services, LCHs, QoS flows or QoS profiles.

Through the above process, the network device configures the multiple DRX configurations for the terminal device. Based on this, the terminal device may perform DRX operation according to the multiple DRX configurations.

For example, the operation that the terminal device performs the DRX operation according to the multiple DRX configurations includes one of:
(1) performing, by the terminal device, the DRX operation according to each DRX parameter or each value of the DRX parameter;
(2) performing, by the terminal device, processing on DRX parameters or values of the DRX parameters for the same function, and performing the DRX operation; or
(3) performing, by the terminal device, processing on part of DRX parameters or part of values of the DRX parameters for the same function, and performing the DRX operation.

In some implementations, the operation that the terminal device performs the DRX operation according to each DRX parameter or each value of the DRX parameter includes:
performing, by the terminal device according to the DRX parameter, the DRX operation for a service, an LCH or a QoS flow related to the DRX parameter; or
performing, by the terminal device according to the value of the DRX parameter, the DRX operation for a service, an LCH or a QoS flow related to the value of the DRX parameter; or
performing, by the terminal device according to the DRX parameter, the DRX operation or the DRX operation for a corresponding medium access control (MAC) entity; or
performing, by the terminal device according to the value of the DRX parameter, the DRX operation or the DRX operation for a corresponding MAC entity.

In some implementations, the operation that the terminal device performs processing on the DRX parameters or the values of the DRX parameters for the same function, and performs the DRX operation includes:
performing, by the terminal device, a first operation on the DRX parameters or the values of the DRX parameters for the same function, and performing the DRX operation using a result of the first operation.

In an example, the first operation includes:
selecting a maximum value or a minimum value from the DRX parameters for the same function; or
selecting a maximum value or a minimum value from the values of the DRX parameters for the same function.

In some implementations, the operation that the terminal device performs processing on part of the DRX parameters or part of the values of the DRX parameters for the same function, and performs the DRX operation includes:
performing, by the terminal device, a first operation on part of the DRX parameters or part of the values of the DRX parameters for the same function, and performing the DRX operation using a result of the first operation.

In an example, the first operation includes:
selecting a maximum value or a minimum value from the DRX parameters for the same function; or
selecting a maximum value or a minimum value from the values of the DRX parameters for the same function.

In the embodiments of the present application, through the configuration method described above, multiple sets of DRX parameters can be configured for the terminal device, and in a case where the multiple sets of DRX parameters are configured, the terminal device can use the DRX parameters to perform the DRX operation.

The embodiments of the present application further provide a configuration method, and the configuration method may be applied to a network device. FIG. 3 is a schematic flowchart of a configuration method 300 according to an embodiment of the present application. Optionally, the method may be applied to the system illustrated in FIG. 1, but is not limited thereto. The method includes at least part of the following content.

In S310: a network device transmits multiple DRX configurations.

The network device may transmit the multiple DRX configurations to a terminal device.

For the specific content of the multiple DRX configurations transmitted by the network device, reference may be made to the relevant description of the multiple DRX configurations in the above configuration method 200, which will not be repeated here.

### Embodiment I

The present embodiment describes a specific manner in which the terminal device receives the multiple DRX configurations configured by the network device and uses the multiple DRX configurations to perform DRX operation.

The specific implementation process is as follows.
I. The UE receives DRX configurations configured by the network, and such DRX configurations are multiple DRX configurations. Specifically, the multiple DRX configurations include at least one of the following.
   1. The multiple DRX configurations are used for different targets or scenarios, or are configured separately for services, LCHs, QoS flows or QoS profiles.
      (1) For example, for the multiple DRX configurations, each DRX configuration is used for different targets or scenarios, or for different services, LCHs, QoS flows or QoS profiles. In an example, the same DRX configuration may be used for one or more targets, one or more scenarios, one or more services, one or more LCHs, one or more QoS flows or one or more QoS profiles.
      (2) For example, different DRX configurations are configured separately for services, LCHs, QoS flows, QoS profiles or PDU sessions for multi-modality, or their respective DRX configurations are configured separately;
         different DRX configurations are configured separately for associated services, associated LCHs, associated QoS flows, associated QoS profiles or associated PDU sessions, or their respective DRX configurations are configured separately;
         different DRX configurations are configured separately for synchronous services, synchronous LCHs, synchronous QoS flows, synchronous QoS profiles or synchronous PDU sessions, or their respective DRX configurations are configured separately;
         different DRX configurations are configured separately for services, LCHs, QoS flows, QoS profiles or PDU sessions for coordinated transmission, or their respective DRX configurations are configured separately;
         different DRX configurations are configured separately for services, LCHs, QoS flows, QoS profiles or PDU sessions with synchronization or coordination requirements, or their respective DRX configurations are configured separately.
   2. The multiple DRX configurations include the configuration of multiple DRX parameters.

For example, the multiple DRX parameters include different values configured for the same DRX parameter.

For example, the multiple DRX parameters include, for a DRX configuration parameter for the same function or one type of DRX configuration parameter (e.g., on-duration timer), the configuration of multiple specific DRX parameters (e.g., on-duration timer 1 for service 1 or QoS flow 1 for multi-modality, and on-duration timer 2 for service 2 or QoS flow 2 for multi-modality).

For example, the DRX configuration parameters include at least one of: drx-onDurationTimer, drx-SlotOffset, drx-InactivityTimer, drx-RetransmissionTimerDL, drx-RetransmissionTimerUL, drx-LongCycleStartOffset, drx-ShortCycle, drx-ShortCycleTimer, drx-HARQ-RTT-TimerDL, drx-HARQ-RTT-TimerUL, a non-integer DRX long cycle, a startoffset corresponding to the non-integer DRX long cycle, or a non-integer DRX short cycle.

For example, in the DRX configuration, only part of the DRX configuration parameters are configured with multiple values (e.g., two on-duration timers are configured, or two parameters are configured for the on-duration timer), while other DRX configuration parameters are configured with a single value (e.g., one HARQ RTT timer is configured, or one parameter is configured for the HARQ RTT timer).

For example, in the DRX configuration, all DRX configuration parameters are configured with multiple values. That is, all parameters have multiple sets or have multiple values.

II. The UE performs the DRX operation according to the DRX configurations. Specifically, it may include at least one of the following.

For the DRX on state determined by any timer, the UE may perform PDCCH monitoring (in this case, no distinction is made among services, LCHs, QoSs, or the like). The timer includes at least one of: drx-onDurationTimer, drx-InactivityTimer, drx-RetransmissionTimerDL or drx-RetransmissionTimerUL.

For the DRX on state determined by a timer related to a service, QoS or LCH, the UE may perform PDCCH monitoring only for that service, LCH or QoS (distinction is made among services, LCHs, or QoSs). The timer includes at least one of: drx-onDurationTimer, drx-InactivityTimer, drx-RetransmissionTimerDL or drx-RetransmissionTimerUL.

For the DRX on state determined by a timer related to a service, QoS or LCH, the UE may perform PDCCH monitoring only for that service, LCH, or QoS (distinction is made among services, LCHs, or QoSs). For a common timer, the UE may perform any PDCCH monitoring in the DRX on state determined by the common timer (no distinction is made among services, LCHs, or QoSs). The common timer includes at least one of: drx-onDurationTimer or drx-InactivityTimer. The timer related to the service, QoS or LCH includes at least one of: drx-RetransmissionTimerUL.

For the multiple DRX configurations, the UE maintains and performs the DRX behavior separately according to respective (each set of) DRX configuration parameters.

For example, DRX parameters or values of DRX parameters are configured separately for QoS flow 1 and QoS flow 2, or DRX parameters or values of DRX parameters are configured separately for LCH 1 and LCH 2. Taking separate configuration of DRX parameters as an example, the DRX parameters for QoS flow 1 or LCH 1 include at least one of: drx-onDurationTimer, drx-SlotOffset, drx-InactivityTimer, drx-RetransmissionTimerDL, drx-RetransmissionTimerUL, drx-LongCycleStartOffset, drx-ShortCycle, drx-ShortCycleTimer, drx-HARQ-RTT-TimerDL, drx-HARQ-RTT-TimerUL, a non-integer DRX long cycle, a startoffset corresponding to the non-integer DRX long cycle or a non-integer DRX short cycle. The DRX parameters for QoS flow 2 or LCH 2 include at least one of: drx-onDurationTimer, drx-SlotOffset, drx-InactivityTimer, drx-RetransmissionTimerDL, drx-RetransmissionTimerUL, drx-LongCycleStartOffset, drx-ShortCycle, drx-ShortCycleTimer, drx-HARQ-RTT-TimerDL, drx-HARQ-RTT-TimerUL, a non-integer DRX long cycle, a startoffset corresponding to the non-integer DRX long cycle or a non-integer DRX short cycle. For QoS flow 1 or LCH 1, the UE determines the on-duration position and duration, the duration of inactivetimer, the durations of the RTT timer and Retx timer and the DRX cycle according to its corresponding DRX parameters, so as to determine the times for the DRX on and off, and/or perform downlink control information (DCI) monitoring. For QoS flow 2 or LCH 2, the user equipment (UE) determines the on-duration position and duration, the duration of inactivetimer, the durations of the RTT timer and Retx timer and the DRX cycle according to its corresponding DRX parameters, so as to determine the times for DRX on and off, and/or perform DCI monitoring.

For the multiple DRX configurations, the UE performs the first operation on the DRX parameters for the same function or the same type of DRX parameters, where the first operation may be referred to as a combined operation, and performs the DRX behavior according to the result of the first operation.

For example, DRX parameters or values of DRX parameters are configured separately for QoS flow 1 and QoS flow 2, or DRX parameters or values of DRX parameters are configured separately for LCH 1 and LCH 2. Taking separate configuration of DRX parameters as an example, the DRX parameters for QoS flow 1 or LCH 1 include at least one of: drx-onDurationTimer, drx-SlotOffset, drx-InactivityTimer, drx-RetransmissionTimerDL, drx-RetransmissionTimerUL, drx-LongCycleStartOffset, drx-ShortCycle, drx-ShortCycleTimer, drx-HARQ-RTT-TimerDL, drx-HARQ-RTT-TimerUL, a non-integer DRX long cycle, a startoffset corresponding to the non-integer DRX long cycle or a non-integer DRX short cycle. The DRX parameters for QoS flow 2 or LCH 2 include at least one of: drx-onDurationTimer, drx-SlotOffset, drx-InactivityTimer, drx-RetransmissionTimerDL, drx-RetransmissionTimerUL, drx-LongCycleStartOffset, drx-ShortCycle, drx-ShortCycleTimer, drx-HARQ-RTT-TimerDL, drx-HARQ-RTT-TimerUL, a non-integer DRX long cycle, a startoffset corresponding to the non-integer DRX long cycle or a non-integer DRX short cycle. If the DRX configuration parameters for the same function have multiple parameters or multiple values, the combined operation is performed on the DRX configuration parameters of this function (that is, selecting which parameter or which value of the parameter to use. For example, the minimum value is selected or the maximum value is selected. For example, for multiple on-duration timers, the on-duration timer with the minimum or maximum value among the multiple on-duration timers is selected as the final value of the on-duration timer. As another example, for multiple inactivetimers, the inactivetimer with the maximum or minimum value among the multiple inactivetimers is selected as the final value of the inactivetimer. As another example, for multiple startoffsets, the startoffset indicating the earliest or latest position among the multiple startoffsets is selected as the final value of the startoffset. As another example, for multiple RTT timers, the RTT timer with the maximum or minimum value among the multiple RTT timers is selected as the final value of the RTT timer). Based on the result after the combined operation, the UE determines the on-duration position and duration, the duration of inactivetimer, the durations of the RTT timer and the Retx timer and the DRX cycle, and/or determines the times for DRX on and off, and/or performs DCI monitoring.

For the multiple DRX configurations, the UE performs the combined operation on part of the DRX parameters for the same function or on part of the DRX parameters with the same type of function, and then performs the DRX behavior.

For example, DRX parameters or values of DRX parameters are configured separately for QoS flow 1 and QoS flow 2, or DRX parameters or values of DRX parameters are configured separately for LCH 1 and LCH 2. Taking separate configuration of DRX parameters as an example, the DRX parameters for QoS flow 1 or LCH 1 include at least one of: drx-onDurationTimer, drx-SlotOffset, drx-InactivityTimer, drx-RetransmissionTimerDL, drx-RetransmissionTimerUL, drx-LongCycleStartOffset, drx-ShortCycle, drx-ShortCycleTimer, drx-HARQ-RTT-TimerDL, drx-HARQ-RTT-TimerUL, a non-integer DRX long cycle, a startoffset corresponding to the non-integer DRX long cycle or a non-integer DRX short cycle. The DRX parameters for QoS flow 2 or LCH 2 include at least one of: drx-onDurationTimer, drx-SlotOffset, drx-InactivityTimer, drx-RetransmissionTimerDL, drx-RetransmissionTimerUL, drx-LongCycleStartOffset, drx-ShortCycle, drx-ShortCycleTimer, drx-HARQ-RTT-TimerDL, drx-HARQ-RTT-TimerUL, a non-integer DRX long cycle, a startoffset corresponding to the non-integer DRX long cycle or a non-integer DRX short cycle. If a specific DRX configuration parameter for the same function has multiple parameters or multiple values, the combined operation is performed on the specific DRX configuration parameter of this function (that is, selecting which parameter or which value of the parameter to use. For example, the minimum value is selected or the maximum value is selected. For example, for multiple on-duration timers, the on-duration timer with the minimum or maximum value among the multiple on-duration timers is selected as the final value of the on-duration timer. For example, for multiple inactivetimers, the inactivetimer with the maximum or minimum value among the multiple inactivetimers is selected as the final value of the inactivetimer. For example, for multiple startoffsets, the respective corresponding startoffset is used for different QoS flows or LCHs. For example, for multiple RTT timers, the respective corresponding value of the RTT timer is used for different QoS flows or LCHs). According to the result after the combined operation on part of the DRX configuration parameters and/or the values of the DRX configuration parameters, the UE determines the on-duration position and duration, the duration of inactivetimer, the durations of the RTT timer and the Retx timer and the DRX cycle, and/or determines the times for DRX on and off, and/or performs DCI monitoring.

The present embodiment provides a method for configuring multiple sets of DRX parameters, and a method for the terminal device to use the DRX parameters to perform the DRX operation in a case where the multiple sets of DRX parameters are configured.

The embodiments of the present application further provide a control method. FIG. 4 is a schematic flowchart of a control method 400 according to an embodiment of the present application. Optionally, the method may be applied to the system illustrated in FIG. 1, but is not limited thereto. The method includes at least part of the following content.

In S410: a terminal device performs a first operation, where the first operation is related to PDCCH monitoring.

Through the control method provided in the embodiments of the present application, the terminal device may perform the operation related to PDCCH monitoring, thereby increasing or decreasing DCI monitoring opportunities, to achieve power consumption control for the terminal device.

The control method provided in the present embodiment may be applied to the scenario of configuring multiple DRX configurations for a terminal device as described in the above configuration method, and may also be applied to the scenario of configuring a single DRX configuration for a terminal device.

In some implementations, the terminal device performing the first operation includes: receiving, by the terminal device, DRX parameters, where the DRX parameters include at least one of:
a DRX on-duration timer (drx-onDurationTimer);
a DRX slot offset (drx-SlotOffset);
a DRX inactivity timer (drx-InactivityTimer);
a DRX downlink retransmission timer (drx-RetransmissionTimerDL);
a DRX uplink retransmission timer (drx-RetransmissionTimerUL);
a DRX long cycle start offset (drx-LongCycleStartOffset);
a DRX short cycle (drx-ShortCycle);
a DRX short cycle timer (drx-ShortCycleTimer);
a DRX downlink HARQ round-trip time timer (drx-HARQ-RTT-TimerDL);
a DRX uplink HARQ round-trip time timer (drx-HARQ-RTT-TimerUL);
a non-integer DRX long cycle;
a start offset (startoffset) corresponding to the non-integer DRX long cycle; or
a non-integer DRX short cycle.

In some implementations, the first operation includes the terminal device performing switching between a DRX long cycle and a DRX short cycle.

In an example, the terminal device performing the first operation includes: performing, by the terminal device, the first operation in a case where a first condition is met.

In an example, the first operation includes switching from a DRX long cycle to a DRX short cycle.

The first condition may include:
receiving network indication information;
arrival of a QoS flow, a PDU session, an LCH, or a data packet for multi-modality;
arrival of an associated QoS flow, an associated PDU session, an associated LCH or an associated data packet;
arrival of a synchronous QoS flow, a synchronous PDU session, a synchronous LCH or a synchronous data packet;
arrival of a QoS flow, a PDU session, an LCH or a data packet for coordinated transmission;
arrival of a QoS flow, a PDU session, an LCH or a data packet with synchronization or coordination requirements;
start of transmission or ongoing transmission of a QoS flow, a PDU session, an LCH or a data packet for multi-modality;
start of transmission or ongoing transmission of an associated QoS flow, an associated PDU session, an associated LCH or an associated data packet;
start of transmission or ongoing transmission of a synchronous QoS flow, a synchronous PDU session, a synchronous LCH or a synchronous data packet;
start of transmission or ongoing transmission of a QoS flow, a PDU session, an LCH or a data packet for coordinated transmission;
start of transmission or ongoing transmission of a QoS flow, a PDU session, an LCH or a data packet with synchronization or coordination requirements;
a latency of a QoS flow, a PDU session, an LCH or a data packet for multi-modality being less than or equal to a first threshold;
a latency of an associated QoS flow, an associated PDU session, an associated LCH or an associated data packet being less than or equal to a first threshold;
a latency of a synchronous QoS flow, a synchronous PDU session, a synchronous LCH or a synchronous data packet being less than or equal to a first threshold;
a latency of a QoS flow, a PDU session, an LCH or a data packet for coordinated transmission being less than or equal to a first threshold;
a latency of a QoS flow, a PDU session, an LCH or a data packet with synchronization or coordination requirements being less than or equal to a first threshold;
partial data of a QoS flow, a PDU session, an LCH or a data packet for multi-modality having been transmitted;
partial data of an associated QoS flow, an associated PDU session, an associated LCH or an associated data packet having been transmitted;
partial data of a synchronous QoS flow, a synchronous PDU session, a synchronous LCH or a synchronous data packet having been transmitted;
partial data of a QoS flow, a PDU session, an LCH or a data packet for coordinated transmission having been transmitted;
partial data of a QoS flow, a PDU session, an LCH or a data packet with synchronization or coordination requirements having been transmitted;
presence of an amount of data to be transmitted for a QoS flow, a PDU session, an LCH or a data packet for multi-modality;
presence of an amount of data to be transmitted for an associated QoS flow, an associated PDU session, an associated LCH or an associated data packet;
presence of an amount of data to be transmitted for a synchronous QoS flow, a synchronous PDU session, a synchronous LCH or a synchronous data packet;
presence of an amount of data to be transmitted for a QoS flow, a PDU session, an LCH or a data packet for coordinated transmission;
presence of an amount of data to be transmitted for a QoS flow, a PDU session, an LCH or a data packet with synchronization or coordination requirements;
an amount of data to be transmitted for a QoS flow, a PDU session, an LCH or a data packet for multi-modality being greater than or equal to a second threshold;
an amount of data to be transmitted for an associated QoS flow, an associated PDU session, an associated LCH or an associated data packet being greater than or equal to a second threshold;
an amount of data to be transmitted for a synchronous QoS flow, a synchronous PDU session, a synchronous LCH or a synchronous data packet being greater than or equal to a second threshold;
an amount of data to be transmitted for a QoS flow, a PDU session, an LCH or a data packet for coordinated transmission being greater than or equal to a second threshold;
an amount of data to be transmitted for a QoS flow, a PDU session, an LCH or a data packet with synchronization or coordination requirements being greater than or equal to a second threshold;
data of a QoS flow, an LCH or a data packet for multi-modality present in a buffer of the terminal device;
data of an associated QoS flow, an associated LCH or an associated data packet present in a buffer of the terminal device;
data of a synchronous QoS flow, a synchronous LCH or a synchronous data packet present in a buffer of the terminal device;
data of a QoS flow, a PDU session, an LCH or a data packet for coordinated transmission present in a buffer of the terminal device; or
data of a QoS flow, a PDU session, an LCH or a data packet with synchronization or coordination requirements present in a buffer of the terminal device.

In an example, the terminal device performing the first operation includes: performing, by the terminal device, the first operation in a case where a second condition is met.

In an example, the first operation includes switching from a DRX short cycle to a DRX long cycle.

The second condition may include:
receiving network indication information;
transmission of a QoS flow, a PDU session, an LCH or a data packet for multi-modality being completed;
transmission of an associated QoS flow, an associated PDU session, an associated LCH or an associated data packet being completed;
transmission of a synchronous QoS flow, a synchronous PDU session, a synchronous LCH or a synchronous data packet being completed;
transmission of a QoS flow, a PDU session, an LCH or a data packet for coordinated transmission being completed;
transmission of a QoS flow, a PDU session, an LCH or a data packet with synchronization or coordination requirements being completed;
a latency of a QoS flow, a PDU session, an LCH or a data packet for multi-modality being less than or equal to a third threshold (the third threshold may be less than the above first threshold);
a latency of an associated QoS flow, an associated PDU session, an associated LCH or an associated data packet being less than or equal to a third threshold;
a latency of a synchronous QoS flow, a synchronous PDU session, a synchronous LCH or a synchronous data packet being less than or equal to a third threshold;
a latency of a QoS flow, a PDU session, an LCH or a data packet for coordinated transmission being less than or equal to a third threshold;
a latency of a QoS flow, a PDU session, an LCH or a data packet with synchronization or coordination requirements being less than or equal to a third threshold;
required data in a QoS flow, a PDU session, an LCH or a data packet for multi-modality having been transmitted;
required data in an associated QoS flow, an associated PDU session, an associated LCH or an associated data packet having been transmitted;
required data in a synchronous QoS flow, a synchronous PDU session, a synchronous LCH or a synchronous data packet having been transmitted;
required data in a QoS flow, a PDU session, an LCH or a data packet for coordinated transmission having been transmitted;
required data in a QoS flow, a PDU session, an LCH or a data packet with synchronization or coordination requirements having been transmitted;
a QoS flow, a PDU session, an LCH or a data packet for multi-modality having no amount of data to be transmitted or being deleted;
an associated QoS flow, an associated PDU session, an associated LCH or an associated data packet having no amount of data to be transmitted or being deleted;
a synchronous QoS flow, a synchronous PDU session, a synchronous LCH or a synchronous data packet having no amount of data to be transmitted or being deleted;
a QoS flow, a PDU session, an LCH or a data packet for coordinated transmission having no amount of data to be transmitted or being deleted;
a QoS flow, a PDU session, an LCH or a data packet with synchronization or coordination requirements having no amount of data to be transmitted or being deleted;
an amount of data to be transmitted for a QoS flow, a PDU session, an LCH or a data packet for multi-modality being less than or equal to a fourth threshold (the fourth threshold may be less than the above second threshold);
an amount of data to be transmitted for an associated QoS flow, an associated PDU session, an associated LCH or an associated data packet being less than or equal to a fourth threshold;
an amount of data to be transmitted for a synchronous QoS flow, a synchronous PDU session, a synchronous LCH or a synchronous data packet being less than or equal to a fourth threshold;
an amount of data to be transmitted for a QoS flow, a PDU session, an LCH or a data packet for coordinated transmission being less than or equal to a fourth threshold;
an amount of data to be transmitted for a QoS flow, a PDU session, an LCH or a data packet with synchronization or coordination requirements being less than or equal to a fourth threshold;
data of a QoS flow, a PDU session, an LCH or a data packet absent from a buffer of the terminal device;
data of an associated QoS flow, an associated PDU session, an associated LCH or an associated data packet absent from a buffer of the terminal device;
data of a synchronous QoS flow, a synchronous PDU session, a synchronous LCH or a synchronous data packet absent from a buffer of the terminal device;
data of a QoS flow, a PDU session, an LCH, or a data packet for coordinated transmission absent from a buffer of the terminal device; or
data of a QoS flow, a PDU session, an LCH or a data packet with synchronization or coordination requirements absent from a buffer of the terminal device.

The network indication information in the above first condition and/or second threshold may include at least one of:
whether to perform switching between a DRX long cycle and a DRX short cycle;
switching to a long cycle or a short cycle; or
a recommended DRX cycle configuration.

In some implementations, the network indication information may be at least one of: a state switch MAC CE, a DRX command MAC CE, or DCI carrying specific indication information.

In some implementations, the terminal device may trigger the DRX cycle switch. For example, the terminal device performs the first operation and transmits first information to the network device, where the first information includes at least one of:
whether to perform switching between a DRX long cycle and a DRX short cycle;
switching to a long cycle or a short cycle; or
a recommended DRX cycle configuration.

The first information may be carried in RRC signaling, an UL MAC CE or UCI.

Through the above method, the terminal device may perform the DRX cycle switch in a case where there are services to be transmitted, to increase or decrease DCI monitoring opportunities.

In some implementations, the first operation includes the terminal device using a predetermined value or configuration for a set DRX parameter.

In an example, the terminal device performing the first operation includes: performing, by the terminal device, the first operation in a case where a first condition is met.

In an example, the first operation includes using a first value or a first configuration for a set DRX parameter.

In an example, the terminal device performing the first operation includes: performing, by the terminal device, the first operation in a case where a second condition is met.

In an example, the first operation includes using a second value or a second configuration for a set DRX parameter.

In some implementations, the above set DRX parameter includes at least one of:
a DRX on-duration timer (drx-onDurationTimer);
a DRX inactivity timer (drx-InactivityTimer);
a DRX downlink retransmission timer (drx-RetransmissionTimerDL);
a DRX uplink retransmission timer (drx-RetransmissionTimerUL);
a DRX short cycle (drx-ShortCycle);
a DRX short cycle timer (drx-ShortCycleTimer);
a DRX downlink HARQ round-trip time timer (drx-HARQ-RTT-TimerDL);
a DRX uplink HARQ round-trip time timer (drx-HARQ-RTT-TimerUL);
a non-integer DRX long cycle; or
a non-integer DRX short cycle.

The first condition and the second condition in the present implementation may refer to the introduction above, and details are not repeated here.

In the example, the network indication information in the first condition and/or the second condition may include at least one of:
whether to perform switching of a DRX parameter value or configuration;
switching to a first value or a first configuration;
a first value or a first configuration; or
switching to a second value or a second configuration.

In some implementations, the switch of the DRX parameter value or configuration may be triggered by the terminal device. For example, the terminal device performs the first operation and transmits second information to the network device, where the second information includes at least one of:
whether to perform switching of a DRX parameter value or configuration;
switching to a first value or a first configuration;
a first value or a first configuration; or
switching to a second value or a second configuration.

The second information may be carried in radio resource control (RRC) signaling, an uplink (UL) MAC control element (CE) or uplink control information (UCI).

Through the above manner, the terminal device may use different DRX parameter values or configurations in a case where there are services to be transmitted, to increase or decrease DCI monitoring opportunities.

In some implementations, the terminal device performing the first operation includes: receiving, by the terminal device, a PDCCH skipping monitoring (PDCCH skipping) parameter.

In an example, the first operation includes the terminal device performing or skipping PDCCH monitoring.

In an example, the terminal device performing the first operation includes: performing, by the terminal device, the first operation in a case where a first condition is met.

In an example, the first operation includes:
the terminal device ignoring an indication of a PDCCH skipping monitoring parameter; and/or
the terminal device monitoring a PDCCH.

In an example, the terminal device performing the first operation includes: performing, by the terminal device, the first operation in a case where a second condition is met.

In an example, the first operation includes the terminal device performing a PDCCH skipping operation; and/or, the terminal device skipping PDCCH monitoring.

The first condition and the second condition in the present implementation may refer to the above introduction, and details are not repeated here.

In the present example, the network indication information in the first condition and/or the second condition may include at least one of:
an indication of ignoring a PDCCH skipping monitoring parameter;
a time period or a time point of ignoring;
whether a PDCCH skipping monitoring operation is executable; or
a time period or a time point during which a PDCCH skipping monitoring operation is executable.

In some implementations, PDCCH skipping may be triggered by the terminal device. For example, the terminal device performs the first operation and transmits third information to a network device, where the third information includes at least one of:
an indication of ignoring a PDCCH skipping monitoring parameter;
a time period or a time point of ignoring;
whether a PDCCH skipping monitoring operation is executable; or
a time period or a time point during which a PDCCH skipping monitoring operation is executable.

The third information may be carried in RRC signaling, an UL MAC CE or UCI.

Through the above manner, the terminal device may ignore PDCCH skipping or perform PDCCH skipping in a case where there are services to be transmitted, to increase or decrease DCI monitoring opportunities.

### Embodiment II

The present embodiment introduces an example of the terminal device performing the switching between the DRX long cycle and the DRX short cycle. The example is applicable to scenarios where the network device configures multiple DRX configurations for the terminal device, as well as to scenarios where the network device configures a single DRX configuration for the terminal device.

The specific implementation process is as follows.
I. The UE receives DRX parameters configured by the network.
   For example, the DRX parameters include at least one of: drx-onDurationTimer, drx-SlotOffset, drx-InactivityTimer, drx-RetransmissionTimerDL, drx-RetransmissionTimerUL, drx-LongCycleStartOffset, drx-ShortCycle, drx-ShortCycleTimer, drx-HARQ-RTT-TimerDL, drx-HARQ-RTT-TimerUL, a non-integer DRX long cycle, a startoffset corresponding to the non-integer DRX long cycle, or a non-integer DRX short cycle.
II. The UE performs the switching between the DRX long cycle and the DRX short cycle; for example, it includes at least one of the following.

In a case where the first condition is met, the UE switches from the DRX long cycle to the DRX short cycle, and the purpose is to increase PDCCH monitoring opportunities. The first condition may include at least one of: receiving network indication information; arrival of a QoS flow, a PDU session, an LCH, or a data packet for multi-modality (or associated, or synchronous, or for coordinated transmission, or with synchronization or coordination requirements); start of transmission or ongoing transmission of a QoS flow, a PDU session, an LCH or a data packet for multi-modality (or associated, or synchronous, or for coordinated transmission, or with synchronization or coordination requirements); a latency of a QoS flow, a PDU session, an LCH or a data packet for multi-modality (or associated, or synchronous, or for coordinated transmission, or with synchronization or coordination requirements) being less than or equal to a first threshold; partial data of a QoS flow, a PDU session, an LCH or a data packet for multi-modality (or associated, or synchronous, or for coordinated transmission, or with synchronization or coordination requirements) having been transmitted; presence of an amount of data to be transmitted for a QoS flow, a PDU session, an LCH or a data packet for multi-modality (or associated, or synchronous, or for coordinated transmission, or with synchronization or coordination requirements); an amount of data to be transmitted for a QoS flow, a PDU session, an LCH or a data packet for multi-modality (or associated, or synchronous, or for coordinated transmission, or with synchronization or coordination requirements) being greater than or equal to a second threshold; or data of a QoS flow, a PDU session, an LCH or a data packet for multi-modality (or associated, or synchronous, or for coordinated transmission, or with synchronization or coordination requirements) present in a buffer of the terminal device.

For example, the switch between the DRX long cycle and the DRX short cycle is triggered by the network, or the network determines whether the first condition is met. For example, the network transmits the network indication information, and the network indication information includes at least one of: a state switch MAC CE, a DRX Command MAC CE or DCI carrying specific indication information.

As another example, the switch between the DRX long cycle and the DRX short cycle is triggered by the UE, or the UE determines whether the first condition is met. Further, if triggered or determined by the UE, the UE may transmit the first information to the network, and the first information may be DRX state switch information. The DRX state switch information may include at least one of: whether to perform switching between a DRX long cycle and a DRX short cycle; switching to a long cycle or a short cycle; or a recommended DRX cycle configuration. The DRX state switch information may be carried in RRC, an UL MAC CE or UCI.

In an example, when data stream 1 is being transmitted (transmitting or receiving a MAC PDU), the MAC switches to using the DRX short cycle to perform PDCCH monitoring for another synchronous flow. Whether it is in the downlink (DL) or the uplink (UL), the gNB indicates the use of the DRX short cycle. For the uplink (UL), if the switch is triggered by the UE, the UE also needs to indicate the switch to the gNB (indicated via UCI or MAC CE).

In an example, when (part of) data packet 1 is being transmitted (transmitting or receiving a MAC PDU), the MAC switches to using the DRX short cycle to perform PDCCH monitoring for data packet 1 and PDCCH monitoring for another synchronous data packet. For the downlink (UL), the gNB indicates the use of the DRX short cycle. For the uplink (UL), in the UE-triggered manner, the UE also needs to indicate the switch to the gNB (indicated via UCI or MAC CE).

In the above process, switching from the DRX long cycle to the DRX short cycle by the terminal device may increase PDCCH monitoring opportunities.

In a case where the second condition is met, the UE switches from the DRX short cycle to the DRX long cycle, and the purpose is to reduce PDCCH monitoring opportunities. The second condition may include at least one of: receiving network indication information; transmission of a QoS flow, a PDU session, an LCH or a data packet for multi-modality (or associated, or synchronous, or for coordinated transmission, or with synchronization or coordination requirements) being completed; start of transmission or ongoing transmission of a QoS flow, a PDU session, an LCH or a data packet for multi-modality (or associated, or synchronous, or for coordinated transmission, or with synchronization or coordination requirements); a latency of a QoS flow, a PDU session, an LCH or a data packet for multi-modality (or associated, or synchronous, or for coordinated transmission, or with synchronization or coordination requirements) being less than or equal to a third threshold (the third threshold may be less than the above first threshold); required data in a QoS flow, a PDU session, an LCH or a data packet for multi-modality (or associated, or synchronous, or for coordinated transmission, or with synchronization or coordination requirements) having been transmitted; a QoS flow, a PDU session, an LCH or a data packet for multi-modality (or associated, or synchronous, or for coordinated transmission, or with synchronization or coordination requirements) having no amount of data to be transmitted or being deleted; an amount of data to be transmitted for a QoS flow, a PDU session, an LCH or a data packet for multi-modality (or associated, or synchronous, or for coordinated transmission, or with synchronization or coordination requirements) being less than or equal to a fourth threshold (the fourth threshold may be less than the above second threshold); or data of a QoS flow, a PDU session, an LCH or a data packet for multi-modality (or associated, or synchronous, or for coordinated transmission, or with synchronization or coordination requirements) absent from a buffer of the terminal device.

For example, the switch between the DRX long cycle and the DRX short cycle is triggered by the network, or the network determines whether the second condition is met. For example, the network transmits the network indication information, and the network indication information may indicate the switch, or a switch to the DRX long cycle. The network indication information may include at least one of: a state switch MAC CE, a DRX Command MAC CE or DCI carrying specific indication information.

As another example, the switch between the DRX long cycle and the DRX short cycle is triggered by the UE, or the UE determines whether the second condition is met. Further, if triggered or determined by the UE, the UE may transmit the first information to the network, and the first information may be DRX state switch information. The DRX state switch information may include at least one of: whether to perform switching between a DRX long cycle and a DRX short cycle; switching to a long cycle or a short cycle; or a recommended DRX cycle configuration. The DRX state switch information may be carried in RRC, an UL MAC CE or UCI.

In the above process, switching from the DRX short cycle to the DRX long cycle by the terminal device may reduce PDCCH monitoring opportunities.

The present embodiment may, for the associated service or the service for multi-modality, perform the DRX cycle switch in a case where there are services to be transmitted, to increase or decrease DCI monitoring opportunities.

### Embodiment III

The present embodiment introduces an example of the terminal device performing the DRX parameter switch. The example is applicable to scenarios where the network device configures multiple DRX configurations for the terminal device, as well as to scenarios where the network device configures a single DRX configuration for the terminal device.

The specific implementation process is as follows.
I. The UE receives the DRX parameters configured by the network.

For example, the DRX parameters include at least one of: drx-onDurationTimer, drx-SlotOffset, drx-InactivityTimer, drx-RetransmissionTimerDL, drx-RetransmissionTimerUL, drx-LongCycleStartOffset, drx-ShortCycle, drx-ShortCycleTimer, drx-HARQ-RTT-TimerDL, drx-HARQ-RTT-TimerUL, a non-integer DRX long cycle, a startoffset corresponding to the non-integer DRX long cycle, or a non-integer DRX short cycle. A second value or a second configuration is configured for the above parameters, and the second value or the second configuration may be considered the default value, or the value used when the first condition is not met.

For part or all of the DRX parameters, a first value or a first configuration may be further configured, and the first value or the first configuration is a value used when the first condition is met. For example, the DRX parameters for which the first value or the first configuration is configured include at least one of: drx-onDurationTimer, drx-InactivityTimer, drx-RetransmissionTimerDL, drx-RetransmissionTimerUL, drx-HARQ-RTT-TimerDL, drx-HARQ-RTT-TimerUL, drx-ShortCycle, drx-ShortCycleTimer, a non-integer DRX long cycle, or a non-integer DRX short cycle.

II. The UE uses the first value or the first configuration for specific DRX configuration parameters, such as timers; for example, it includes at least one of the following.

In a case where the first condition is met, the UE uses the first value or the first configuration for specific DRX configuration parameters, such as timers, and the purpose is to increase PDCCH monitoring opportunities. The first condition may include at least one of: receiving network indication information; arrival of a QoS flow, a PDU session, an LCH, or a data packet for multi-modality (or associated, or synchronous, or for coordinated transmission, or with synchronization or coordination requirements); start of transmission or ongoing transmission of a QoS flow, a PDU session, an LCH or a data packet for multi-modality (or associated, or synchronous, or for coordinated transmission, or with synchronization or coordination requirements); a latency of a QoS flow, a PDU session, an LCH or a data packet for multi-modality (or associated, or synchronous, or for coordinated transmission, or with synchronization or coordination requirements) being less than or equal to a first threshold; partial data of a QoS flow, a PDU session, an LCH or a data packet for multi-modality (or associated, or synchronous, or for coordinated transmission, or with synchronization or coordination requirements) having been transmitted; presence of an amount of data to be transmitted for a QoS flow, a PDU session, an LCH or a data packet for multi-modality (or associated, or synchronous, or for coordinated transmission, or with synchronization or coordination requirements); an amount of data to be transmitted for a QoS flow, a PDU session, an LCH or a data packet for multi-modality (or associated, or synchronous, or for coordinated transmission, or with synchronization or coordination requirements) being greater than or equal to a second threshold; or data of a QoS flow, a PDU session, an LCH or a data packet for multi-modality (or associated, or synchronous, or for coordinated transmission, or with synchronization or coordination requirements) present in a buffer of the terminal device.

Herein, which configured grant (CG)/dynamic grant (DG)/HARQ entity/LCH/UE is allowed to use the first value may be configured by the network.

In some examples, after the terminal device uses the first value or the first configuration for a first duration, the UE switches to using the default value, i.e., using a second value or a second configuration. Alternatively, in a case where the network indicates a change to use the default value, the UE switches to using the default value, i.e., using the second value or the second configuration.

For example, the switch is triggered by the network, or the network determines whether the first condition is met. For example, the network transmits the network indication information; and the network indication information is used to indicate the switch, or to indicate a switch to use the first value or the first configuration, or to indicate the first value or the first configuration. The network indication information may include at least one of: a state switch MAC CE, a DRX Command MAC CE, or DCI carrying specific indication information.

As another example, the switch is triggered by the UE, or the UE determines whether the first condition is met. Further, if triggered or determined by the UE, the UE may transmit the second information to the network, and the second information may be DRX state switch information. The DRX state switch information may include at least one of: whether to switch, switching to use a first value or a first configuration, or a value corresponding to the first value or a first configuration. The DRX state switch information may be carried in RRC, an UL MAC CE, or UCI.

In an example, when data stream 1 is being transmitted (transmitting or receiving a MAC PDU), the MAC switches to using a specific Inactivitytimer to monitor another synchronous flow. Whether it is in the downlink (DL) or the uplink (UL), the gNB indicates the use of a new timer/value (indicated via DCI or MAC CE). For the uplink, if triggered by the user equipment (UE), the UE also needs to indicate the switch to the gNB (indicated via UCI or MAC CE).

In an example, when (part of) data packet 1 is being transmitted (transmitting or receiving a MAC PDU), the MAC switches to using a specific Inactivitytimer to monitor data packet 1 and another synchronous data packet. For the downlink (DL), the gNB further indicates the use of a new timer/value (indicated via DCI or MAC CE). For the uplink (UL), in the user equipment (UE)-triggered manner, the UE also needs to indicate the switch to the gNB (indicated via UCI or MAC CE).

In the above process, the terminal device may use the first value or the first configuration for specific DRX parameters to increase PDCCH monitoring opportunities.

In a case where the second condition is met, for the above DRX parameters, the first value or the first configuration is reverted to the default value, i.e., the DRX parameters use the second value or the second configuration. The second condition includes at least one of: receiving network indication information; transmission of a QoS flow, a PDU session, an LCH or a data packet for multi-modality (or associated, or synchronous, or for coordinated transmission, or with synchronization or coordination requirements) being completed; start of transmission or ongoing transmission of a QoS flow, a PDU session, an LCH or a data packet for multi-modality (or associated, or synchronous, or for coordinated transmission, or with synchronization or coordination requirements); a latency of a QoS flow, a PDU session, an LCH or a data packet for multi-modality (or associated, or synchronous, or for coordinated transmission, or with synchronization or coordination requirements) being less than or equal to a third threshold (the third threshold may be less than the above first threshold); required data in a QoS flow, a PDU session, an LCH or a data packet for multi-modality (or associated, or synchronous, or for coordinated transmission, or with synchronization or coordination requirements) having been transmitted; a QoS flow, a PDU session, an LCH or a data packet for multi-modality (or associated, or synchronous, or for coordinated transmission, or with synchronization or coordination requirements) having no amount of data to be transmitted or being deleted; an amount of data to be transmitted for a QoS flow, a PDU session, an LCH or a data packet for multi-modality (or associated, or synchronous, or for coordinated transmission, or with synchronization or coordination requirements) being less than or equal to a fourth threshold (the fourth threshold may be less than the above second threshold); or data of a QoS flow, a PDU session, an LCH or a data packet for multi-modality (or associated, or synchronous, or for coordinated transmission, or with synchronization or coordination requirements) absent from a buffer of the terminal device.

For example, the switch is triggered by the network, or the network determines whether the second condition is met. For example, the network transmits the network indication information; and the network indication information is used to indicate the switch, or to indicate a switch to use the default value (e.g., the second value or the second configuration). The network indication information may include at least one of: a state switch MAC CE, a DRX Command MAC CE, or DCI carrying specific indication information.

As another example, the switch is triggered by the UE, or the UE determines whether the second condition is met. Further, if triggered or determined by the UE, the UE may transmit the second information to the network, and the second information may be DRX state switch information. The DRX state switch information may include at least one of: whether to switch, or an indication for switching to use a default value (e.g., the second value or the second configuration). The DRX state switch information may be carried in RRC, an UL MAC CE, or UCI.

The present embodiment may be directed to the associated service or the service for multi-modality, and in a case where there are services to be transmitted, by using timers with different time lengths, DCI monitoring opportunities are increased or decreased.

### Embodiment IV

The present embodiment introduces an example of the terminal device performing PDCCH skipping monitoring (i.e., skipping). The example is applicable to scenarios where the network device configures multiple DRX configurations for the terminal device, as well as to scenarios where the network device configures a single DRX configuration for the terminal device.

The specific implementation process is as follows.
I. The UE receives the PDCCH skipping parameter configured by the network. The PDCCH skipping parameter may include at least one of: PDCCHskippingDuration-list.
II. The UE determines whether to ignore the PDCCH skipping. For example, in a case where the network indicates (e.g., via DCI) the UE to perform PDCCH skipping, the UE determines whether to ignore an indication of the PDCCH skipping, i.e., confirms whether to perform PDCCH monitoring. This includes at least one of the following.

In a case where the first condition is met, the UE ignores the indication of the PDCCH skipping, and/or monitors the PDCCH (or monitors the PDCCH of an associated service). Alternatively, in a case where the first condition is met, within the duration of PDCCH skipping, the UE ignores the indication of the PDCCH skipping, and/or monitors the PDCCH (or monitors the PDCCH of the associated service). Its purpose is to increase PDCCH monitoring opportunities. The first condition may include at least one of: receiving network indication information; arrival of a QoS flow, a PDU session, an LCH, or a data packet for multi-modality (or associated, or synchronous, or for coordinated transmission, or with synchronization or coordination requirements); start of transmission or ongoing transmission of a QoS flow, a PDU session, an LCH or a data packet for multi-modality (or associated, or synchronous, or for coordinated transmission, or with synchronization or coordination requirements); a latency of a QoS flow, a PDU session, an LCH or a data packet for multi-modality (or associated, or synchronous, or for coordinated transmission, or with synchronization or coordination requirements) being less than or equal to a first threshold; partial data of a QoS flow, a PDU session, an LCH or a data packet for multi-modality (or associated, or synchronous, or for coordinated transmission, or with synchronization or coordination requirements) having been transmitted; presence of an amount of data to be transmitted for a QoS flow, a PDU session, an LCH or a data packet for multi-modality (or associated, or synchronous, or for coordinated transmission, or with synchronization or coordination requirements); an amount of data to be transmitted for a QoS flow, a PDU session, an LCH or a data packet for multi-modality (or associated, or synchronous, or for coordinated transmission, or with synchronization or coordination requirements) being greater than or equal to a second threshold; or data of a QoS flow, a PDU session, an LCH or a data packet for multi-modality (or associated, or synchronous, or for coordinated transmission, or with synchronization or coordination requirements) present in a buffer of the terminal device.

Herein, which CG/DG/HARQ entity/LCH/UE is allowed to ignore PDCCH skipping may be configured by the network.

For example, the switch is triggered by the network, or the network determines whether the first condition is met. For example, the network transmits the network indication information. The indication information is used to indicate the UE to ignore the indication of PDCCH skipping, or to monitor the PDCCH during the time period (or part of the time period/time point thereof) indicated by the PDCCH skipping. The network indication information includes at least one of: a state switch MAC CE, a DRX Command MAC CE, or DCI carrying specific indication information.

As another example, the switch is triggered by the UE, or the UE determines whether the first condition is met. Further, if triggered or determined by the UE, the UE transmits third information to the network, and the third information may indicate an operation of ignoring the PDCCH skipping. The third information (or indication information) may include at least one of: an indication of ignoring PDCCH skipping, or a time period or a time point of ignoring. The third information (or indication information) may be carried in RRC, an UL MAC CE, or UCI.

In the above process, the terminal device may increase PDCCH monitoring opportunities.

In a case where the second condition is met, the UE may perform automatic PDCCH skipping (e.g., perform PDCCH skipping, or inform the network of information that PDCCH skipping may be performed). The second condition includes at least one of: receiving network indication information; transmission of a QoS flow, a PDU session, an LCH or a data packet for multi-modality (or associated, or synchronous, or for coordinated transmission, or with synchronization or coordination requirements) being completed; start of transmission or ongoing transmission of a QoS flow, a PDU session, an LCH or a data packet for multi-modality (or associated, or synchronous, or for coordinated transmission, or with synchronization or coordination requirements); a latency of a QoS flow, a PDU session, an LCH or a data packet for multi-modality (or associated, or synchronous, or for coordinated transmission, or with synchronization or coordination requirements) being less than or equal to a third threshold (the third threshold may be less than the above first threshold); required data in a QoS flow, a PDU session, an LCH or a data packet for multi-modality (or associated, or synchronous, or for coordinated transmission, or with synchronization or coordination requirements) having been transmitted; a QoS flow, a PDU session, an LCH or a data packet for multi-modality (or associated, or synchronous, or for coordinated transmission, or with synchronization or coordination requirements) having no amount of data to be transmitted or being deleted; an amount of data to be transmitted for a QoS flow, a PDU session, an LCH or a data packet for multi-modality (or associated, or synchronous, or for coordinated transmission, or with synchronization or coordination requirements) being less than or equal to a fourth threshold (the fourth threshold may be less than the above second threshold); or data of a QoS flow, a PDU session, an LCH or a data packet for multi-modality (or associated, or synchronous, or for coordinated transmission, or with synchronization or coordination requirements) absent from a buffer of the terminal device.

For example, the switch is triggered by the UE, or the UE determines whether the second condition is met. Further, if triggered or determined by the UE, the UE may indicate to the network information about the PDCCH skipping that the UE can perform. The information may include at least one of: whether PDCCH skipping can be performed, or a time period or time point during which PDCCH skipping can be performed. The network may, based on the indication of the UE, ultimately determine whether to indicate to the UE to perform PDCCH skipping and/or the time period for performing PDCCH skipping.

The present embodiment may be directed to the associated service or the service for multi-modality, and in a case where there are services to be transmitted, by ignoring the PDCCH skipping, DCI monitoring opportunities are increased.

FIG. 5 is a schematic block diagram of a terminal device 500 according to an embodiment of the present application. The terminal device 500 includes:
a first transceiver module 510, configured to receive multiple DRX configurations.

In an implementation, the multiple DRX configurations are used for different targets or scenarios, or the multiple DRX configurations are configured respectively for different services, LCHs, QoS flows, or QoS profiles.

In an implementation, in the multiple DRX configurations, a same DRX configuration is used for at least one target or scenario, or a same DRX configuration is configured for at least one service, LCH, QoS flow, or QoS profile.

In an implementation, the multiple DRX configurations include multiple configurations for at least one DRX parameter.

In an implementation, in the at least one DRX parameter, a same DRX parameter has multiple values.

In an implementation, different values among the multiple values are used for different targets or scenarios, or different values among the multiple values are configured respectively for different services, LCHs, QoS flows, or QoS profiles.

In an implementation, in the multiple DRX configurations, a DRX configuration for a same function includes multiple DRX parameters.

In an implementation, different DRX parameters among the multiple DRX parameters are used for different targets or scenarios, or different DRX parameters among the multiple DRX parameters are configured respectively for different services, LCHs, QoS flows, or QoS profiles.

In an implementation, DRX parameters in the multiple DRX configurations include at least one of:
a DRX on-duration timer (drx-onDurationTimer);
a DRX slot offset (drx-SlotOffset);
a DRX inactivity timer (drx-InactivityTimer);
a DRX downlink retransmission timer (drx-RetransmissionTimerDL);
a DRX uplink retransmission timer (drx-RetransmissionTimerUL);
a DRX long cycle start offset (drx-LongCycleStartOffset);
a DRX short cycle (drx-ShortCycle);
a DRX short cycle timer (drx-ShortCycleTimer);
a DRX downlink HARQ round-trip time timer (drx-HARQ-RTT-TimerDL);
a DRX uplink HARQ round-trip time timer (drx-HARQ-RTT-TimerUL);
a non-integer DRX long cycle;
a start offset (startoffset) corresponding to the non-integer DRX long cycle; or
a non-integer DRX short cycle.

In an implementation, each of the DRX parameters is for a same function; and/or
a plurality of the DRX parameters are for a same function; and/or
all or part of a plurality of the DRX parameters are used for different targets or scenarios, or are configured respectively for different services, LCHs, QoS flows or QoS profiles.

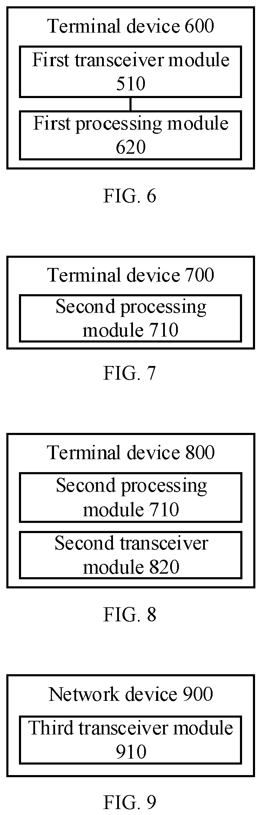

FIG. 6 is a schematic block diagram of a terminal device 600 according to an embodiment of the present application. As illustrated in FIG. 6, the terminal device 600 further includes:
a first processing module 620, configured to perform DRX operation according to the multiple DRX configurations.

In an implementation, the first processing module 620 is configured to perform one of the following:
performing the DRX operation according to each DRX parameter or each value of the DRX parameter;
performing processing on DRX parameters or values of the DRX parameters for a same function, and performing the DRX operation; or
perform processing on part of DRX parameters or part of values of the DRX parameters for a same function, and performing the DRX operation.

In an implementation, the first processing module 620 is configured to: perform, according to the DRX parameter, the DRX operation for a service, an LCH or a QoS flow related to the DRX parameter; or
perform, according to the value of the DRX parameter, the DRX operation for a service, an LCH or a QoS flow related to the value of the DRX parameter; or
perform, according to the DRX parameter, the DRX operation or the DRX operation for a corresponding MAC entity; or
perform, according to the value of the DRX parameter, the DRX operation or the DRX operation for a corresponding MAC entity.

In an implementation, the first processing module 620 is configured to:
perform a first operation on the DRX parameters or the values of the DRX parameters for the same function, and perform the DRX operation using a result of the first operation.

In an implementation, the first processing module 620 is configured to:
perform a first operation on part of the DRX parameters or part of the values of the DRX parameters for the same function, and perform the DRX operation using a result of the first operation.

In an implementation, the first operation includes:
selecting a maximum value or a minimum value from the DRX parameters for the same function; or
selecting a maximum value or a minimum value from the values of the DRX parameters for the same function.

In an implementation, a DRX parameter configuration in the multiple DRX configurations is included in one or more of the following information:
DRX configuration information (DRX-config);
a DRX configuration secondary group (DRX-configSecondaryGroup); or
a MAC-cell group configuration (MAC-CellGroupConfig).

In an implementation, different services are associated services, services for multi-modality, synchronous services, services for coordinated transmission, or services with synchronization or coordination requirements;
different LCHs are associated LCHs, LCHs for multi-modality, synchronous LCHs, LCHs for coordinated transmission, or LCHs with synchronization or coordination requirements;
DRX is associated DRX, DRX for multi-modality, synchronous DRX, DRX for coordinated transmission, or DRX with synchronization or coordination requirements;
different QoS flows are associated QoS flows, QoS flows for multi-modality, synchronous QoS flows, QoS flows for coordinated transmission, or QoS flows with synchronization or coordination requirements;
different QoS flows are associated PDU sessions, PDU sessions for multi-modality, synchronous PDU sessions, PDU sessions for coordinated transmission, or PDU sessions with synchronization or coordination requirements; and
different QoS profiles are associated QoS profiles, QoS profiles for multi-modality, synchronous QoS profiles, QoS profiles for coordinated transmission, or QoS profiles with synchronization or coordination requirements.

The terminal device 500 and the terminal device 600 in the embodiments of the present application are capable of implementing the corresponding functions of the terminal device in the above method embodiments. The processes, functions, implementation methods and beneficial effects corresponding to various modules (sub-modules, units, components, and so on) in the terminal device 500 and the terminal device 600 may refer to the corresponding descriptions of the above method embodiments, and will not be repeated here. It should be noted that the functions described with respect to the various modules (sub-modules, units, components, and so on) in the terminal device 500 and the terminal device 600 in the embodiments of the present application may be implemented by different modules (sub-modules, units, components, and so on) or by the same module (sub-module, unit, component, and so on).

FIG. 7 is a schematic block diagram of a terminal device 700 according to an embodiment of the present application. The terminal device 700 includes:
a second processing module 710, configured to perform a first operation, where the first operation is related to PDCCH monitoring.

In an implementation, the second processing module 710 is configured to receive DRX parameters, where the DRX parameters include at least one of:
a DRX on-duration timer (drx-onDurationTimer);
a DRX slot offset (drx-SlotOffset);
a DRX inactivity timer (drx-InactivityTimer);
a DRX downlink retransmission timer (drx-RetransmissionTimerDL);
a DRX uplink retransmission timer (drx-RetransmissionTimerUL);
a DRX long cycle start offset (drx-LongCycleStartOffset);
a DRX short cycle (drx-ShortCycle);
a DRX short cycle timer (drx-ShortCycleTimer);
a DRX downlink HARQ round-trip time timer (drx-HARQ-RTT-TimerDL);
a DRX uplink HARQ round-trip time timer (drx-HARQ-RTT-TimerUL);
a non-integer DRX long cycle;
a start offset (startoffset) corresponding to the non-integer DRX long cycle; or
a non-integer DRX short cycle.

In an implementation, the first operation includes the terminal device performing switching between a DRX long cycle and a DRX short cycle.

In an implementation, the second processing module 710 is configured to perform the first operation in a case where a first condition is met.

In an implementation, the first operation includes switching from a DRX long cycle to a DRX short cycle.

In an implementation, the second processing module 710 is configured to perform the first operation in a case where a second condition is met.

In an implementation, the first operation includes switching from a DRX short cycle to a DRX long cycle.

FIG. 8 is a schematic block diagram of a terminal device 800 according to an embodiment of the present application. As illustrated in FIG. 8, the terminal device 800 includes:
a second transceiver module 820, configured to transmit first information to a network device, where the first information includes at least one of:
whether to perform switching between a DRX long cycle and a DRX short cycle;
switching to a long cycle or a short cycle; or
a recommended DRX cycle configuration.

In an implementation, the first information is carried in RRC signaling, an UL MAC CE or UCI.

In an implementation, the first operation includes the terminal device using a predetermined value or configuration for a set DRX parameter.

In an implementation, the second processing module 710 is configured to perform the first operation in a case where a first condition is met.

In an implementation, the first operation includes using a first value or a first configuration for a set DRX parameter.

In some implementations, the second processing module 710 is configured to perform the first operation in a case where a second condition is met.

In an implementation, the first operation includes using a second value or a second configuration for a set DRX parameter.

In an implementation, the set DRX parameter includes at least one of:
a DRX on-duration timer (drx-onDurationTimer);
a DRX inactivity timer (drx-InactivityTimer);
a DRX downlink retransmission timer (drx-RetransmissionTimerDL);
a DRX uplink retransmission timer (drx-RetransmissionTimerUL);
a DRX short cycle (drx-ShortCycle);
a DRX short cycle timer (drx-ShortCycleTimer);
a DRX downlink HARQ round-trip time timer (drx-HARQ-RTT-TimerDL);
a DRX uplink HARQ round-trip time timer (drx-HARQ-RTT-TimerUL);
a non-integer DRX long cycle; or
a non-integer DRX short cycle.

In an implementation, the second transceiver module 820 is configured to transmit second information to a network device, where the second information includes at least one of:
whether to perform switching of a DRX parameter value or configuration;
switching to a first value or a first configuration;
a first value or a first configuration; or
switching to a second value or a second configuration.

In an implementation, the second information is carried in RRC signaling, a UL MAC CE or UCI.

In an implementation, the second processing module 710 is configured to receive a PDCCH skipping monitoring parameter.

In an implementation, the first operation includes the terminal device performing or skipping PDCCH monitoring.

In an implementation, the second processing module 710 is configured to perform the first operation in a case where a first condition is met.

In an implementation, the first operation includes:
the terminal device ignoring an indication of a PDCCH skipping monitoring parameter; and/or
the terminal device monitoring a PDCCH.

In an implementation, the second processing module 710 is configured to perform the first operation in a case where a second condition is met.

In an implementation, the first operation includes the terminal device performing a PDCCH skipping monitoring operation.

In an implementation, the second transceiver module 820 is configured to transmit third information to a network device, where the third information includes at least one of:
an indication of ignoring a PDCCH skipping monitoring parameter;
a time period or a time point of ignoring;
whether a PDCCH skipping monitoring operation is executable; or
a time period or a time point during which a PDCCH skipping monitoring operation is executable.

In an implementation, the third message is carried in RRC signaling, a UL MAC CE, or UCI.

In an implementation, the first condition includes one or more of:
receiving network indication information;
arrival of a QoS flow, a PDU session, an LCH, or a data packet for multi-modality;
arrival of an associated QoS flow, an associated PDU session, an associated LCH or an associated data packet;
arrival of a synchronous QoS flow, a synchronous PDU session, a synchronous LCH or a synchronous data packet;
arrival of a QoS flow, a PDU session, an LCH or a data packet for coordinated transmission;
arrival of a QoS flow, a PDU session, an LCH or a data packet with synchronization or coordination requirements;
start of transmission or ongoing transmission of a QoS flow, a PDU session, an LCH or a data packet for multi-modality;
start of transmission or ongoing transmission of an associated QoS flow, an associated PDU session, an associated LCH or an associated data packet;
start of transmission or ongoing transmission of a synchronous QoS flow, a synchronous PDU session, a synchronous LCH or a synchronous data packet;
start of transmission or ongoing transmission of a QoS flow, a PDU session, an LCH or a data packet for coordinated transmission;
start of transmission or ongoing transmission of a QoS flow, a PDU session, an LCH or a data packet with synchronization or coordination requirements;
a latency of a QoS flow, a PDU session, an LCH or a data packet for multi-modality being less than or equal to a first threshold;
a latency of an associated QoS flow, an associated PDU session, an associated LCH or an associated data packet being less than or equal to a first threshold;
a latency of a synchronous QoS flow, a synchronous PDU session, a synchronous LCH or a synchronous data packet being less than or equal to a first threshold;
a latency of a QoS flow, a PDU session, an LCH or a data packet for coordinated transmission being less than or equal to a first threshold;
a latency of a QoS flow, a PDU session, an LCH or a data packet with synchronization or coordination requirements being less than or equal to a first threshold;
partial data of a QoS flow, a PDU session, an LCH or a data packet for multi-modality having been transmitted;
partial data of an associated QoS flow, an associated PDU session, an associated LCH or an associated data packet having been transmitted;
partial data of a synchronous QoS flow, a synchronous PDU session, a synchronous LCH or a synchronous data packet having been transmitted;
partial data of a QoS flow, a PDU session, an LCH or a data packet for coordinated transmission having been transmitted;
partial data of a QoS flow, a PDU session, an LCH or a data packet with synchronization or coordination requirements having been transmitted;
presence of an amount of data to be transmitted for a QoS flow, a PDU session, an LCH or a data packet for multi-modality;
presence of an amount of data to be transmitted for an associated QoS flow, an associated PDU session, an associated LCH or an associated data packet;
presence of an amount of data to be transmitted for a synchronous QoS flow, a synchronous PDU session, a synchronous LCH or a synchronous data packet;
presence of an amount of data to be transmitted for a QoS flow, a PDU session, an LCH or a data packet for coordinated transmission;
presence of an amount of data to be transmitted for a QoS flow, a PDU session, an LCH or a data packet with synchronization or coordination requirements;
an amount of data to be transmitted for a QoS flow, a PDU session, an LCH or a data packet for multi-modality being greater than or equal to a second threshold;
an amount of data to be transmitted for an associated QoS flow, an associated PDU session, an associated LCH or an associated data packet being greater than or equal to a second threshold;
an amount of data to be transmitted for a synchronous QoS flow, a synchronous PDU session, a synchronous LCH or a synchronous data packet being greater than or equal to a second threshold;
an amount of data to be transmitted for a QoS flow, a PDU session, an LCH or a data packet for coordinated transmission being greater than or equal to a second threshold;
an amount of data to be transmitted for a QoS flow, a PDU session, an LCH or a data packet with synchronization or coordination requirements being greater than or equal to a second threshold;
data of a QoS flow, an LCH or a data packet for multi-modality present in a buffer of the terminal device;
data of an associated QoS flow, an associated LCH or an associated data packet present in a buffer of the terminal device;
data of a synchronous QoS flow, a synchronous LCH or a synchronous data packet present in a buffer of the terminal device;
data of a QoS flow, a PDU session, an LCH or a data packet for coordinated transmission present in a buffer of the terminal device; or
data of a QoS flow, a PDU session, an LCH or a data packet with synchronization or coordination requirements present in a buffer of the terminal device.

In an implementation, the second condition includes one or more of:
receiving network indication information;
transmission of a QoS flow, a PDU session, an LCH or a data packet for multi-modality being completed;
transmission of an associated QoS flow, an associated PDU session, an associated LCH or an associated data packet being completed;
transmission of a synchronous QoS flow, a synchronous PDU session, a synchronous LCH or a synchronous data packet being completed;
transmission of a QoS flow, a PDU session, an LCH or a data packet for coordinated transmission being completed;
transmission of a QoS flow, a PDU session, an LCH or a data packet with synchronization or coordination requirements being completed;
a latency of a QoS flow, a PDU session, an LCH or a data packet for multi-modality being less than or equal to a third threshold;
a latency of an associated QoS flow, an associated PDU session, an associated LCH or an associated data packet being less than or equal to a third threshold;
a latency of a synchronous QoS flow, a synchronous PDU session, a synchronous LCH or a synchronous data packet being less than or equal to a third threshold;
a latency of a QoS flow, a PDU session, an LCH or a data packet for coordinated transmission being less than or equal to a third threshold;
a latency of a QoS flow, a PDU session, an LCH or a data packet with synchronization or coordination requirements being less than or equal to a third threshold;
required data in a QoS flow, a PDU session, an LCH or a data packet for multi-modality having been transmitted;
required data in an associated QoS flow, an associated PDU session, an associated LCH or an associated data packet having been transmitted;
required data in a synchronous QoS flow, a synchronous PDU session, a synchronous LCH or a synchronous data packet having been transmitted;
required data in a QoS flow, a PDU session, an LCH or a data packet for coordinated transmission having been transmitted;
required data in a QoS flow, a PDU session, an LCH or a data packet with synchronization or coordination requirements having been transmitted;
a QoS flow, a PDU session, an LCH or a data packet for multi-modality having no amount of data to be transmitted or being deleted;
an associated QoS flow, an associated PDU session, an associated LCH or an associated data packet having no amount of data to be transmitted or being deleted;
a synchronous QoS flow, a synchronous PDU session, a synchronous LCH or a synchronous data packet having no amount of data to be transmitted or being deleted;
a QoS flow, a PDU session, an LCH or a data packet for coordinated transmission having no amount of data to be transmitted or being deleted;
a QoS flow, a PDU session, an LCH or a data packet with synchronization or coordination requirements having no amount of data to be transmitted or being deleted;
an amount of data to be transmitted for a QoS flow, a PDU session, an LCH or a data packet for multi-modality being less than or equal to a fourth threshold;
an amount of data to be transmitted for an associated QoS flow, an associated PDU session, an associated LCH or an associated data packet being less than or equal to a fourth threshold;
an amount of data to be transmitted for a synchronous QoS flow, a synchronous PDU session, a synchronous LCH or a synchronous data packet being less than or equal to a fourth threshold;
an amount of data to be transmitted for a QoS flow, a PDU session, an LCH or a data packet for coordinated transmission being less than or equal to a fourth threshold;
an amount of data to be transmitted for a QoS flow, a PDU session, an LCH or a data packet with synchronization or coordination requirements being less than or equal to a fourth threshold;
data of a QoS flow, a PDU session, an LCH or a data packet for multi-modality absent from a buffer of the terminal device;
data of an associated QoS flow, an associated PDU session, an associated LCH or an associated data packet absent from a buffer of the terminal device;
data of a synchronous QoS flow, a synchronous PDU session, a synchronous LCH or a synchronous data packet absent from a buffer of the terminal device;
data of a QoS flow, a PDU session, an LCH, or a data packet for coordinated transmission absent from a buffer of the terminal device; or
data of a QoS flow, a PDU session, an LCH or a data packet with synchronization or coordination requirements absent from a buffer of the terminal device.

In an implementation, the network indication information includes at least one of:
whether to perform switching between a DRX long cycle and a DRX short cycle;
switching to a long cycle or a short cycle; or
a recommended DRX cycle configuration.

In an implementation, the network indication information includes at least one of:
whether to perform switching of a DRX parameter value or configuration;
switching to a first value or a first configuration; or
a first value or a first configuration

In an implementation, the network indication information includes at least one of:
an indication of ignoring a PDCCH skipping monitoring parameter;
a time period or time point of ignoring;
whether a PDCCH skipping monitoring operation is executable; or
a time period or a time point during which a PDCCH skipping monitoring operation is executable.

In an implementation, the network indication information is at least one of: a state switching MAC CE, a DRX command MAC CE, or DCI carrying specific indication information.

The terminal device 700 and the terminal device 800 in the embodiments of the present application are capable of implementing the corresponding functions of the terminal device in the above method embodiments. The processes, functions, implementation methods and beneficial effects corresponding to various modules (sub-modules, units, components, and so on) in the terminal device 700 and the terminal device 800 may refer to the corresponding descriptions of the above method embodiments, and will not be repeated here. It should be noted that the functions described with respect to the various modules (sub-modules, units, components, and so on) in the terminal device 700 and the terminal device 800 in the embodiments of the present application may be implemented by different modules (sub-modules, units, components, and so on) or by the same module (sub-module, unit, component, and so on).

FIG. 9 is a schematic block diagram of a network device 900 according to an embodiment of the present application. The network device 900 includes:
a third transceiver module 910, configured to transmit multiple DRX configurations.

In an implementation, the multiple DRX configurations are used for different targets or scenarios, or the multiple DRX configurations are configured respectively for different services, LCHs, QoS flows, or QoS profiles.

In an implementation, in the multiple DRX configurations, a same DRX configuration is used for at least one target or scenario, or a same DRX configuration is configured for at least one service, LCH, QoS flow, or QoS profile.

In an implementation, the multiple DRX configurations include multiple configurations for at least one DRX parameter.

In an implementation, in the at least one DRX parameter, a same DRX parameter has multiple values.

In an implementation, different values among the multiple values are used for different targets or scenarios, or different values among the multiple values are configured respectively for different services, LCHs, QoS flows, or QoS profiles.

In an implementation, in the multiple DRX configurations, a DRX configuration for a same function includes multiple DRX parameters.

In an implementation, different DRX parameters among the multiple DRX parameters are used for different targets or scenarios, or different DRX parameters among the multiple DRX parameters are configured respectively for different services, LCHs, QoS flows, or QoS profiles.

In an implementation, DRX parameters in the multiple DRX configurations include at least one of:
a DRX on-duration timer (drx-onDurationTimer);
a DRX slot offset (drx-SlotOffset);
a DRX inactivity timer (drx-InactivityTimer);
a DRX downlink retransmission timer (drx-RetransmissionTimerDL);
a DRX uplink retransmission timer (drx-RetransmissionTimerUL);
a DRX long cycle start offset (drx-LongCycleStartOffset);
a DRX short cycle (drx-ShortCycle);
a DRX short cycle timer (drx-ShortCycleTimer);
a DRX downlink HARQ round-trip time timer (drx-HARQ-RTT-TimerDL);
a DRX uplink HARQ round-trip time timer (drx-HARQ-RTT-TimerUL);
a non-integer DRX long cycle;
a start offset (startoffset) corresponding to the non-integer DRX long cycle; or
a non-integer DRX short cycle.

In an implementation, each of the DRX parameters is for a same function; and/or
a plurality of the DRX parameters are for a same function; and/or
all or part of a plurality of the DRX parameters are used for different targets or scenarios, or are configured respectively for different services, LCHs, QoS flows or QoS profiles.

In an implementation, a DRX parameter configuration in the multiple DRX configurations is included in one or more of the following information:
DRX configuration information (DRX-config);
a DRX configuration secondary group (DRX-configSecondaryGroup); or
a MAC-cell group configuration (MAC-CellGroupConfig).

In an implementation, different services are associated services, services for multi-modality, synchronous services, services for coordinated transmission, or services with synchronization or coordination requirements;
different LCHs are associated LCHs, LCHs for multi-modality, synchronous LCHs, LCHs for coordinated transmission, or LCHs with synchronization or coordination requirements;
DRX is associated DRX, DRX for multi-modality, synchronous DRX, DRX for coordinated transmission, or DRX with synchronization or coordination requirements;
different QoS flows are associated QoS flows, QoS flows for multi-modality, synchronous QoS flows, QoS flows for coordinated transmission, or QoS flows with synchronization or coordination requirements;
different QoS flows are associated protocol data unit (PDU) sessions, PDU sessions for multi-modality, synchronous PDU sessions, PDU sessions for coordinated transmission, or PDU sessions with synchronization or coordination requirements; and
different QoS profiles are associated QoS profiles, QoS profiles for multi-modality, synchronous QoS profiles, QoS profiles for coordinated transmission, or QoS profiles with synchronization or coordination requirements.

The network device 900 in the embodiments of the present application is capable of implementing the corresponding functions of the network device in the above method embodiments. The processes, functions, implementation methods and beneficial effects corresponding to various modules (sub-modules, units, components, and so on) in the network 900 device may refer to the corresponding descriptions of the above method embodiments, and will not be repeated here. It should be noted that the functions described with respect to the various modules (sub-modules, units, components, and so on) in the network device 900 in the embodiments of the present application may be implemented by different modules (sub-modules, units, components, and so on) or by the same module (sub-module, unit, component, and so on).

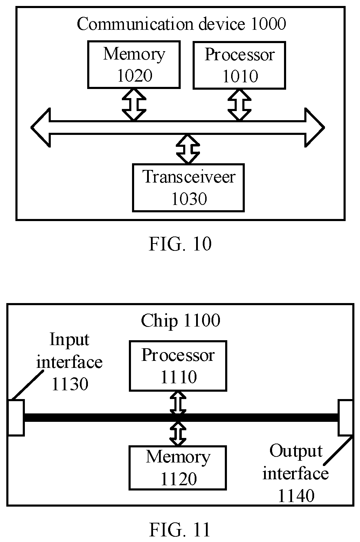

FIG. 10 is a schematic structural diagram of a communication device 1000 according to the embodiments of the present application. The communication device 1000 includes a processor 1010, and the processor 1010 may invoke a computer program from a memory and execute the computer program, to enable the communication device 1000 to implement the methods in the embodiments of the present application.

In an implementation, the communication device 1000 may further include a memory 1020. The processor 1010 may invoke a computer program from the memory 1020 and execute the computer program, to enable the communication device 1000 to implement the methods in the embodiments of the present application.

The memory 1020 may be a separate device independent of the processor 1010, or may be integrated into the processor 1010.

In an implementation, the communication device 1000 may further include a transceiver 1030. The processor 1010 may control the transceiver 1030 to communicate with other devices, and specifically, to transmit information or data to other devices, or receive information or data transmitted by other devices.

The transceiver 1030 may include a transmitter and a receiver. The transceiver 1030 may further include antenna(s), and the number of antenna(s) may be one or more.

In an implementation, the communication device 1000 may be the network device in the embodiments of the present application, and the communication device 1000 may implement the corresponding procedures implemented by the network device in the various methods in the embodiments of the present application, which will not be repeated here for the sake of brevity.

In an implementation, the communication device 1000 may be the terminal device in the embodiments of the present application, and the communication device 1000 may implement the corresponding procedures implemented by the terminal device in the various methods in the embodiments of the present application, which will not be repeated here for the sake of brevity.

FIG. 11 is a schematic structural diagram of a chip 1100 according to the embodiments of the present application. The chip 1100 includes a processor 1110, and the processor 1110 may invoke a computer program from a memory and execute the computer program, to implement the methods in the embodiments of the present application.

In an implementation, the chip 1100 may further include a memory 1120. The processor 1110 may invoke a computer program from the memory 1120 and execute the computer program, to implement the methods performed by the terminal device or the network device in the embodiments of the present application.

The memory 1120 may be a separate device independent of the processor 1110, or may be integrated into the processor 1110.

In an implementation, the chip 1100 may further include an input interface 1130. The processor 1110 may control the input interface 1130 to communicate with other devices or chips, and specifically, may obtain information or data transmitted by other devices or chips.

In an implementation, the chip 1100 may further include an output interface 1140. The processor 1110 may control the output interface 1140 to communicate with other devices or chips, and specifically, may output information or data to other devices or chips.

In an implementation, the chip may be applied to the network device in the embodiments of the present application, and the chip may implement the corresponding procedures implemented by the network device in the various methods in the embodiments of the present application, which will not be repeated here for the sake of brevity.

In an implementation, the chip may be applied to the terminal device in the embodiments of the present application, and the chip may implement the corresponding procedures implemented by the terminal device in the various methods in the embodiments of the present application, which will not be repeated here for the sake of brevity.

The chip applied to the network device and the terminal device may be the same chip or different chips.

It should be understood that the chip mentioned in the embodiments of the present application may also be referred to as a system-level chip, a system chip, a chip system, a system-on-a-chip, or the like.

The above processor may be a general-purpose processor, a digital signal processor (DSP), a field programmable gate array (FPGA), an application specific integrated circuit (ASIC), or other programmable logic devices, transistor logic devices, discrete hardware components, or the like. The above general-purpose processor may be a microprocessor, or may also be any conventional processor, or the like.

The above memory may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the above memory is exemplary but not limiting illustration. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), and so on. That is, the memory in the embodiments of the present application is intended to include, but is not limited to, these and any other suitable types of memories.

The above embodiments may be implemented in whole or in part through software, hardware, firmware or any combination thereof. When implemented by using software, the embodiments may be implemented in a form of a computer program product in whole or in part. The computer program product includes one or more computer instructions. When the computer program instructions are loaded on and executed by a computer, processes or functions according to the embodiments of the present application are generated in whole or in part. The computer may be a general-purpose computer, a dedicated computer, a computer network or any other programmable apparatuses. The computer instructions may be stored in a computer-readable storage medium or transmitted from one computer-readable storage medium to another computer-readable storage medium. For example, the computer instructions may be transmitted from a website, a computer, a server or a data center to another website, computer, server or data center via a wired manner (e.g., coaxial cable, optical fiber, or digital subscriber line (DSL)) or a wireless manner (e.g., infrared, radio or microwave). The computer-readable storage medium may be any available medium able to be accessed by the computer, or may be a data storage device, such as a server or a data center, integrated by one or more available media. The available medium may be a magnetic medium (e.g., a floppy disk, a hard disk or a magnetic tape), an optical medium (e.g., a digital video disc (DVD)), a semiconductor medium (e.g., a solid state disk (SSD)), or the like.

It should be understood that, in the various embodiments of the present application, the magnitude of the serial number of each of the above processes does not mean the order of execution. The execution order of each process should be determined by its function and internal logic, and should not constitute any limitation on the implementation process of the embodiments of the present application.

It may be clearly understood by those skilled in the art that, for convenience and brevity of the description, the specific working procedures of the systems, apparatuses and units described above may refer to the corresponding procedures in the above method embodiments, which will not be repeated here.

The above description is only specific implementation of the present application, but the protection scope of the present application is not limited thereto. Any person skilled in the art may readily conceive of variations or substitutions within the technical scope disclosed in the present application, which should be included within the protection scope of the present application. Therefore, the protection scope of the present application shall be subject to the protection scope of the claims.

## Claims

1. A configuration method, comprising:
receiving, by a terminal device, multiple discontinuous reception (DRX) configurations.

2. The method according to claim 1, wherein the multiple DRX configurations are used for different targets or scenarios, or the multiple DRX configurations are configured respectively for different services, logical channels (LCHs), Quality of Service (QoS) flows, or QoS profiles.

3. The method according to claim 1 or 2, wherein in the multiple DRX configurations, a same DRX configuration is used for at least one target or scenario, or a same DRX configuration is configured for at least one service, LCH, QoS flow, or QoS profile.

4. The method according to any one of claims 1 to 3, wherein the multiple DRX configurations comprise multiple configurations for at least one DRX parameter.

5. The method according to claim 4, wherein in the at least one DRX parameter, a same DRX parameter has multiple values.

6. The method according to claim 5, wherein different values among the multiple values are used for different targets or scenarios, or different values among the multiple values are configured respectively for different services, LCHs, QoS flows, or QoS profiles.

7. The method according to any one of claims 1 to 3, wherein in the multiple DRX configurations, a DRX configuration for a same function comprises multiple DRX parameters.

8. The method according to claim 7, wherein different DRX parameters among the multiple DRX parameters are used for different targets or scenarios, or different DRX parameters among the multiple DRX parameters are configured respectively for different services, LCHs, QoS flows, or QoS profiles.

9. The method according to any one of claims 1 to 8, wherein DRX parameters in the multiple DRX configurations comprise at least one of:
a DRX on-duration timer (drx-onDurationTimer);
a DRX slot offset (drx-SlotOffset);
a DRX inactivity timer (drx-InactivityTimer);
a DRX downlink retransmission timer (drx-RetransmissionTimerDL);
a DRX uplink retransmission timer (drx-RetransmissionTimerUL);
a DRX long cycle start offset (drx-LongCycleStartOffset);
a DRX short cycle (drx-ShortCycle);
a DRX short cycle timer (drx-ShortCycleTimer);
a DRX downlink Hybrid Automatic Repeat reQuest (HARQ) round-trip time timer (drx-HARQ-RTT-TimerDL);
a DRX uplink HARQ round-trip time timer (drx-HARQ-RTT-TimerUL);
a non-integer DRX long cycle;
a start offset (startoffset) corresponding to the non-integer DRX long cycle; or
a non-integer DRX short cycle.

10. The method according to claim 9, wherein
each of the DRX parameters is for a same function; and/or
a plurality of the DRX parameters are for a same function; and/or
all or part of a plurality of the DRX parameters are used for different targets or scenarios, or are configured respectively for different services, LCHs, QoS flows or QoS profiles.

11. The method according to any one of claims 1 to 10, further comprising:
performing, by the terminal device, DRX operation according to the multiple DRX configurations.

12. The method according to claim 11, wherein performing, by the terminal device, the DRX operation according to the multiple DRX configurations comprises one of:
performing, by the terminal device, the DRX operation according to each DRX parameter or each value of the DRX parameter;
performing, by the terminal device, processing on DRX parameters or values of the DRX parameters for a same function, and performing the DRX operation; or
performing, by the terminal device, processing on part of DRX parameters or part of values of the DRX parameters for a same function, and performing the DRX operation.
performing, by the terminal device, processing on part of DRX parameters or part of values of the DRX parameters for a same function, and performing the DRX operation.

13. The method according to claim 12, wherein performing, by the terminal device, the DRX operation according to each DRX parameter or each value of the DRX parameter comprises:
performing, by the terminal device according to the DRX parameter, the DRX operation for a service, an LCH or a QoS flow related to the DRX parameter; or
performing, by the terminal device according to the value of the DRX parameter, the DRX operation for a service, an LCH or a QoS flow related to the value of the DRX parameter; or
performing, by the terminal device according to the DRX parameter, the DRX operation or the DRX operation for a corresponding medium access control (MAC) entity; or
performing, by the terminal device according to the value of the DRX parameter, the DRX operation or the DRX operation for a corresponding MAC entity.

14. The method according to claim 12, wherein performing, by the terminal device, processing on the DRX parameters or the values of the DRX parameters for the same function, and performing the DRX operation comprises:
performing, by the terminal device, a first operation on the DRX parameters or the values of the DRX parameters for the same function, and performing the DRX operation using a result of the first operation.

15. The method according to claim 12, wherein performing, by the terminal device, processing on part of the DRX parameters or part of the values of the DRX parameters for the same function, and performing the DRX operation comprises:
performing, by the terminal device, a first operation on part of the DRX parameters or part of the values of the DRX parameters for the same function, and performing the DRX operation using a result of the first operation.

16. The method according to claim 14 or 15, wherein the first operation comprises:
selecting a maximum value or a minimum value from the DRX parameters for the same function; or
selecting a maximum value or a minimum value from the values of the DRX parameters for the same function.

17. The method according to any one of claims 1 to 16, wherein a DRX parameter configuration in the multiple DRX configurations is comprised in one or more of the following information:
DRX configuration information (DRX-config);
a DRX configuration secondary group (DRX-configSecondaryGroup); or
a MAC-cell group configuration (MAC-CellGroupConfig).

18. The method according to any one of claims 1 to 17, wherein
different services are associated services, services for multi-modality, synchronous services, services for coordinated transmission, or services with synchronization or coordination requirements;
different LCHs are associated LCHs, LCHs for multi-modality, synchronous LCHs, LCHs for coordinated transmission, or LCHs with synchronization or coordination requirements;
DRX is associated DRX, DRX for multi-modality, synchronous DRX, DRX for coordinated transmission, or DRX with synchronization or coordination requirements;
different QoS flows are associated QoS flows, QoS flows for multi-modality, synchronous QoS flows, QoS flows for coordinated transmission, or QoS flows with synchronization or coordination requirements;
different QoS flows are associated protocol data unit (PDU) sessions, PDU sessions for multi-modality, synchronous PDU sessions, PDU sessions for coordinated transmission, or PDU sessions with synchronization or coordination requirements; and
different QoS profiles are associated QoS profiles, QoS profiles for multi-modality, synchronous QoS profiles, QoS profiles for coordinated transmission, or QoS profiles with synchronization or coordination requirements.

19. A control method, comprising:
performing, by a terminal device, a first operation, wherein the first operation is related to physical downlink control channel (PDCCH) monitoring.

20. The method according to claim 19, wherein performing, by the terminal device, the first operation comprises:
receiving, by the terminal device, DRX parameters, wherein the DRX parameters comprise at least one of:
a DRX on-duration timer (drx-onDurationTimer);
a DRX slot offset (drx-SlotOffset);
a DRX inactivity timer (drx-InactivityTimer);
a DRX downlink retransmission timer (drx-RetransmissionTimerDL);
a DRX uplink retransmission timer (drx-RetransmissionTimerUL);
a DRX long cycle start offset (drx-LongCycleStartOffset);
a DRX short cycle (drx-ShortCycle);
a DRX short cycle timer (drx-ShortCycleTimer);
a DRX downlink Hybrid Automatic Repeat reQuest (HARQ) round-trip time timer (drx-HARQ-RTT-TimerDL);
a DRX uplink HARQ round-trip time timer (drx-HARQ-RTT-TimerUL);
a non-integer DRX long cycle;
a start offset (startoffset) corresponding to the non-integer DRX long cycle; or
a non-integer DRX short cycle.

21. The method according to claim 19 or 20, wherein the first operation comprises the terminal device performing switching between a DRX long cycle and a DRX short cycle.

22. The method according to any one of claims 19 to 21, wherein performing, by the terminal device, the first operation comprises:
performing, by the terminal device, the first operation in a case where a first condition is met.

23. The method according to claim 22, wherein the first operation comprises switching from a DRX long cycle to a DRX short cycle.

24. The method according to any one of claims 19 to 21, wherein performing, by the terminal device, the first operation comprises:
performing, by the terminal device, the first operation in a case where a second condition is met.

25. The method according to claim 24, wherein the first operation comprises switching from a DRX short cycle to a DRX long cycle.

26. The method according to any one of claims 19 to 25, further comprising:
transmitting, by the terminal device, first information to a network device, wherein the first information comprises at least one of:
whether to perform switching between a DRX long cycle and a DRX short cycle;
switching to a long cycle or a short cycle; or
a recommended DRX cycle configuration.

27. The method according to claim 26, wherein the first information is carried in radio resource control (RRC) signaling, an uplink (UL) medium access control (MAC) control element (CE) or uplink control information (UCI).

28. The method according to claim 19 or 20, wherein the first operation comprises the terminal device using a predetermined value or configuration for a set DRX parameter.

29. The method according to claim 19, 20 or 28, wherein performing, by the terminal device, the first operation comprises:
performing, by the terminal device, the first operation in a case where a first condition is met.

30. The method according to claim 29, wherein the first operation comprises using a first value or a first configuration for a set DRX parameter.

31. The method according to claim 19, 20 or 28, wherein performing, by the terminal device, the first operation comprises:
performing, by the terminal device, the first operation in a case where a second condition is met.

32. The method according to claim 31, wherein the first operation comprises using a second value or a second configuration for a set DRX parameter.

33. The method according to claim 28, 30 or 32, wherein the set DRX parameter comprises at least one of:
a DRX on-duration timer (drx-onDurationTimer);
a DRX inactivity timer (drx-InactivityTimer);
a DRX downlink retransmission timer (drx-RetransmissionTimerDL);
a DRX uplink retransmission timer (drx-RetransmissionTimerUL);
a DRX short cycle (drx-ShortCycle);
a DRX short cycle timer (drx-ShortCycleTimer);
a DRX downlink HARQ round-trip time timer (drx-HARQ-RTT-TimerDL);
a DRX uplink HARQ round-trip time timer (drx-HARQ-RTT-TimerUL);
a non-integer DRX long cycle; or
a non-integer DRX short cycle.

34. The method according to any one of claims 19, 20 or 28 to 33, further comprising: transmitting, by the terminal device, second information to a network device, wherein the second information comprises at least one of:
whether to perform switching of a DRX parameter value or configuration;
switching to a first value or a first configuration;
a first value or a first configuration; or
switching to a second value or a second configuration.

35. The method according to claim 34, wherein the second information is carried in RRC signaling, a UL MAC CE or UCI.

36. The method according to claim 19, wherein performing, by the terminal device, the first operation comprises:
receiving, by the terminal device, a PDCCH skipping monitoring parameter.

37. The method according to claim 19 or 36, wherein the first operation comprises the terminal device performing or skipping PDCCH monitoring.

38. The method according to claim 19, 36 or 37, wherein performing, by the terminal device, the first operation comprises:
performing, by the terminal device, the first operation in a case where a first condition is met.

39. The method according to claim 38, wherein the first operation comprises:
the terminal device ignoring an indication of a PDCCH skipping monitoring parameter; and/or
the terminal device monitoring a PDCCH.

40. The method according to claim 19, 36 or 37, wherein performing, by the terminal device, the first operation comprises:
performing, by the terminal device, the first operation in a case where a second condition is met.

41. The method according to claim 40, wherein the first operation comprises the terminal device performing a PDCCH skipping monitoring operation.

42. The method according to any one of claims 19 and 36 to 41, further comprising:
transmitting, by the terminal device, third information to a network device, wherein the third information comprises at least one of:
an indication of ignoring a PDCCH skipping monitoring parameter;
a time period or a time point of ignoring;
whether a PDCCH skipping monitoring operation is executable; or
a time period or a time point during which a PDCCH skipping monitoring operation is executable.

43. The method according to claim 42, wherein the third information is carried in RRC signaling, a UL MAC CE or UCI.

44. The method according to any one of claims 19 to 43, wherein the first condition comprises one or more of:
receiving network indication information;
arrival of a QoS flow, a PDU session, an LCH, or a data packet for multi-modality;
arrival of an associated QoS flow, an associated PDU session, an associated LCH or an associated data packet;
arrival of a synchronous QoS flow, a synchronous PDU session, a synchronous LCH or a synchronous data packet;
arrival of a QoS flow, a PDU session, an LCH or a data packet for coordinated transmission;
arrival of a QoS flow, a PDU session, an LCH or a data packet with synchronization or coordination requirements;
start of transmission or ongoing transmission of a QoS flow, a PDU session, an LCH or a data packet for multi-modality;
start of transmission or ongoing transmission of an associated QoS flow, an associated PDU session, an associated LCH or an associated data packet;
start of transmission or ongoing transmission of a synchronous QoS flow, a synchronous PDU session, a synchronous LCH or a synchronous data packet;
start of transmission or ongoing transmission of a QoS flow, a PDU session, an LCH or a data packet for coordinated transmission;
start of transmission or ongoing transmission of a QoS flow, a PDU session, an LCH or a data packet with synchronization or coordination requirements;
a latency of a QoS flow, a PDU session, an LCH or a data packet for multi-modality being less than or equal to a first threshold;
a latency of an associated QoS flow, an associated PDU session, an associated LCH or an associated data packet being less than or equal to a first threshold;
a latency of a synchronous QoS flow, a synchronous PDU session, a synchronous LCH or a synchronous data packet being less than or equal to a first threshold;
a latency of a QoS flow, a PDU session, an LCH or a data packet for coordinated transmission being less than or equal to a first threshold;
a latency of a QoS flow, a PDU session, an LCH or a data packet with synchronization or coordination requirements being less than or equal to a first threshold;
partial data of a QoS flow, a PDU session, an LCH or a data packet for multi-modality having been transmitted;
partial data of an associated QoS flow, an associated PDU session, an associated LCH or an associated data packet having been transmitted;
partial data of a synchronous QoS flow, a synchronous PDU session, a synchronous LCH or a synchronous data packet having been transmitted;
partial data of a QoS flow, a PDU session, an LCH or a data packet for coordinated transmission having been transmitted;
partial data of a QoS flow, a PDU session, an LCH or a data packet with synchronization or coordination requirements having been transmitted;
presence of an amount of data to be transmitted for a QoS flow, a PDU session, an LCH or a data packet for multi-modality;
presence of an amount of data to be transmitted for an associated QoS flow, an associated PDU session, an associated LCH or an associated data packet;
presence of an amount of data to be transmitted for a synchronous QoS flow, a synchronous PDU session, a synchronous LCH or a synchronous data packet;
presence of an amount of data to be transmitted for a QoS flow, a PDU session, an LCH or a data packet for coordinated transmission;
presence of an amount of data to be transmitted for a QoS flow, a PDU session, an LCH or a data packet with synchronization or coordination requirements;
an amount of data to be transmitted for a QoS flow, a PDU session, an LCH or a data packet for multi-modality being greater than or equal to a second threshold;
an amount of data to be transmitted for an associated QoS flow, an associated PDU session, an associated LCH or an associated data packet being greater than or equal to a second threshold;
an amount of data to be transmitted for a synchronous QoS flow, a synchronous PDU session, a synchronous LCH or a synchronous data packet being greater than or equal to a second threshold;
an amount of data to be transmitted for a QoS flow, a PDU session, an LCH or a data packet for coordinated transmission being greater than or equal to a second threshold;
an amount of data to be transmitted for a QoS flow, a PDU session, an LCH or a data packet with synchronization or coordination requirements being greater than or equal to a second threshold;
data of a QoS flow, an LCH or a data packet for multi-modality present in a buffer of the terminal device;
data of an associated QoS flow, an associated LCH or an associated data packet present in a buffer of the terminal device;
data of a synchronous QoS flow, a synchronous LCH or a synchronous data packet present in a buffer of the terminal device;
data of a QoS flow, a PDU session, an LCH or a data packet for coordinated transmission present in a buffer of the terminal device; or
data of a QoS flow, a PDU session, an LCH or a data packet with synchronization or coordination requirements present in a buffer of the terminal device.

45. The method according to claim 24, 25, 31, 32, 40 or 41, wherein the second condition comprises one or more of:
receiving network indication information;
transmission of a QoS flow, a PDU session, an LCH or a data packet for multi-modality being completed;
transmission of an associated QoS flow, an associated PDU session, an associated LCH or an associated data packet being completed;
transmission of a synchronous QoS flow, a synchronous PDU session, a synchronous LCH or a synchronous data packet being completed;
transmission of a QoS flow, a PDU session, an LCH or a data packet for coordinated transmission being completed;
transmission of a QoS flow, a PDU session, an LCH or a data packet with synchronization or coordination requirements being completed;
a latency of a QoS flow, a PDU session, an LCH or a data packet for multi-modality being less than or equal to a third threshold;
a latency of an associated QoS flow, an associated PDU session, an associated LCH or an associated data packet being less than or equal to a third threshold;
a latency of a synchronous QoS flow, a synchronous PDU session, a synchronous LCH or a synchronous data packet being less than or equal to a third threshold;
a latency of a QoS flow, a PDU session, an LCH or a data packet for coordinated transmission being less than or equal to a third threshold;
a latency of a QoS flow, a PDU session, an LCH or a data packet with synchronization or coordination requirements being less than or equal to a third threshold;
required data in a QoS flow, a PDU session, an LCH or a data packet for multi-modality having been transmitted;
required data in an associated QoS flow, an associated PDU session, an associated LCH or an associated data packet having been transmitted;
required data in a synchronous QoS flow, a synchronous PDU session, a synchronous LCH or a synchronous data packet having been transmitted;
required data in a QoS flow, a PDU session, an LCH or a data packet for coordinated transmission having been transmitted;
required data in a QoS flow, a PDU session, an LCH or a data packet with synchronization or coordination requirements having been transmitted;
a QoS flow, a PDU session, an LCH or a data packet for multi-modality having no amount of data to be transmitted or being deleted;
an associated QoS flow, an associated PDU session, an associated LCH or an associated data packet having no amount of data to be transmitted or being deleted;
a synchronous QoS flow, a synchronous PDU session, a synchronous LCH or a synchronous data packet having no amount of data to be transmitted or being deleted;
a QoS flow, a PDU session, an LCH or a data packet for coordinated transmission having no amount of data to be transmitted or being deleted;
a QoS flow, a PDU session, an LCH or a data packet with synchronization or coordination requirements having no amount of data to be transmitted or being deleted;
an amount of data to be transmitted for a QoS flow, a PDU session, an LCH or a data packet for multi-modality being less than or equal to a fourth threshold;
an amount of data to be transmitted for an associated QoS flow, an associated PDU session, an associated LCH or an associated data packet being less than or equal to a fourth threshold;
an amount of data to be transmitted for a synchronous QoS flow, a synchronous PDU session, a synchronous LCH or a synchronous data packet being less than or equal to a fourth threshold;
an amount of data to be transmitted for a QoS flow, a PDU session, an LCH or a data packet for coordinated transmission being less than or equal to a fourth threshold;
an amount of data to be transmitted for a QoS flow, a PDU session, an LCH or a data packet with synchronization or coordination requirements being less than or equal to a fourth threshold;
data of a QoS flow, a PDU session, an LCH or a data packet for multi-modality absent from a buffer of the terminal device;
data of an associated QoS flow, an associated PDU session, an associated LCH or an associated data packet absent from a buffer of the terminal device;
data of a synchronous QoS flow, a synchronous PDU session, a synchronous LCH or a synchronous data packet absent from a buffer of the terminal device;
data of a QoS flow, a PDU session, an LCH, or a data packet for coordinated transmission absent from a buffer of the terminal device; or
data of a QoS flow, a PDU session, an LCH or a data packet with synchronization or coordination requirements absent from a buffer of the terminal device.

46. The method according to claim 44 or 45, wherein the network indication information comprises at least one of:
whether to perform switching between a DRX long cycle and a DRX short cycle;
switching to a long cycle or a short cycle; or
a recommended DRX cycle configuration.

47. The method according to claim 44 or 45, wherein the network indication information comprises at least one of:
whether to perform switching of a DRX parameter value or configuration;
switching to a first value or a first configuration;
a first value or a first configuration; or
switching to a second value or a second configuration.

48. The method according to claim 44 or 45, wherein the network indication information comprises at least one of:
an indication of ignoring a PDCCH skipping monitoring parameter;
a time period or time point of ignoring;
whether a PDCCH skipping monitoring operation is executable; or
a time period or a time point during which a PDCCH skipping monitoring operation is executable.

49. The method according to any one of claims 44 and 45 to 48, wherein the network indication information is at least one of: a state switching MAC CE, a DRX command MAC CE, or DCI carrying specific indication information.

50. A configuration method, comprising:
transmitting, by a network device, multiple discontinuous reception (DRX) configurations.

51. The method according to claim 50, wherein the multiple DRX configurations are used for different targets or scenarios, or the multiple DRX configurations are configured respectively for different services, logical channels (LCHs), Quality of Service (QoS) flows, or QoS profiles.

52. The method according to claim 50 or 51, wherein in the multiple DRX configurations, a same DRX configuration is used for at least one target or scenario, or a same DRX configuration is configured for at least one service, LCH, QoS flow, or QoS profile.

53. The method according to any one of claims 50 to 52, wherein the multiple DRX configurations comprise multiple configurations for at least one DRX parameter.

54. The method according to claim 53, wherein in the at least one DRX parameter, a same DRX parameter has multiple values.

55. The method according to claim 54, wherein different values among the multiple values are used for different targets or scenarios, or different values among the multiple values are configured respectively for different services, LCHs, QoS flows, or QoS profiles.

56. The method according to any one of claims 50 to 52, wherein in the multiple DRX configurations, a DRX configuration for a same function comprises multiple DRX parameters.

57. The method according to claim 56, wherein different DRX parameters among the multiple DRX parameters are used for different targets or scenarios, or different DRX parameters among the multiple DRX parameters are configured respectively for different services, LCHs, QoS flows, or QoS profiles.

58. The method according to any one of claims 50 to 57, wherein DRX parameters in the multiple DRX configurations comprise at least one of:
a DRX on-duration timer (drx-onDurationTimer);
a DRX slot offset (drx-SlotOffset);
a DRX inactivity timer (drx-InactivityTimer);
a DRX downlink retransmission timer (drx-RetransmissionTimerDL);
a DRX uplink retransmission timer (drx-RetransmissionTimerUL);
a DRX long cycle start offset (drx-LongCycleStartOffset);
a DRX short cycle (drx-ShortCycle);
a DRX short cycle timer (drx-ShortCycleTimer);
a DRX downlink Hybrid Automatic Repeat reQuest (HARQ) round-trip time timer (drx-HARQ-RTT-TimerDL);
a DRX uplink HARQ round-trip time timer (drx-HARQ-RTT-TimerUL);
a non-integer DRX long cycle;
a start offset (startoffset) corresponding to the non-integer DRX long cycle; or
a non-integer DRX short cycle.

59. The method according to claim 58, wherein
each of the DRX parameters is for a same function; and/or
a plurality of the DRX parameters are for a same function; and/or
all or part of a plurality of the DRX parameters are used for different targets or scenarios, or are configured respectively for different services, LCHs, QoS flows or QoS profiles.

60. The method according to any one of claims 50 to 59, wherein a DRX parameter configuration in the multiple DRX configurations is comprised in one or more of the following information:
DRX configuration information (DRX-config);
a DRX configuration secondary group (DRX-configSecondaryGroup); or
a MAC-cell group configuration (MAC-CellGroupConfig).

61. The method according to any one of claims 50 to 60, wherein
different services are associated services, services for multi-modality, synchronous services, services for coordinated transmission, or services with synchronization or coordination requirements;
different LCHs are associated LCHs, LCHs for multi-modality, synchronous LCHs, LCHs for coordinated transmission, or LCHs with synchronization or coordination requirements;
DRX is associated DRX, DRX for multi-modality, synchronous DRX, DRX for coordinated transmission, or DRX with synchronization or coordination requirements;
different QoS flows are associated QoS flows, QoS flows for multi-modality, synchronous QoS flows, QoS flows for coordinated transmission, or QoS flows with synchronization or coordination requirements;
different QoS flows are associated protocol data unit (PDU) sessions, PDU sessions for multi-modality, synchronous PDU sessions, PDU sessions for coordinated transmission, or PDU sessions with synchronization or coordination requirements; and
different QoS profiles are associated QoS profiles, QoS profiles for multi-modality, synchronous QoS profiles, QoS profiles for coordinated transmission, or QoS profiles with synchronization or coordination requirements.

62. A terminal device, comprising:
a first transceiver module, configured to receive multiple discontinuous reception (DRX) configurations.

63. A terminal device, comprising:
a second processing module, configured to perform a first operation, wherein the first operation is related to physical downlink control channel (PDCCH) monitoring.

64. A network device, comprising:
a third transceiver module, configured to receive multiple discontinuous reception (DRX) configurations.

65. A terminal device, comprising: a transceiver, a processor, and a memory, wherein the memory is configured to store a computer program, the transceiver is configured to communicate with other devices, and the processor is configured to invoke and execute the computer program stored in the memory, to enable the terminal device to perform the method according to any one of claims 1 to 18 or the method according to any one of claims 19 to 49.

66. A network device, comprising: a transceiver, a processor, and a memory, wherein the memory is configured to store a computer program, the transceiver is configured to communicate with other devices, and the processor is configured to invoke and execute the computer program stored in the memory, to enable the network device to perform the method according to any one of claims 50 to 61.

67. A chip, comprising: a processor, configured to invoke a computer program from a memory and execute the computer program, to enable a device equipped with the chip to perform the method according to any one of claims 1 to 18, the method according to any one of claims 19 to 49 or the method according to any one of claims 50 to 61.

68. A computer-readable storage medium, configured to store a computer program, wherein the computer program, when executed by a device, enables the device to perform the method according to any one of claims 1 to 18, the method according to any one of claims 19 to 49 or the method according to any one of claims 50 to 61.

69. A computer program product, comprising computer program instructions, wherein the computer program instructions enable a computer to perform the method according to any one of claims 1 to 18, the method according to any one of claims 19 to 49 or the method according to any one of claims 50 to 61.

70. A computer program, wherein the computer program enables a computer to perform the method according to any one of claims 1 to 18, the method according to any one of claims 19 to 49 or the method according to any one of claims 50 to 61.
